Europäisches Patentamt

European Patent Office

Office européen des brevets

(19)

(11) **EP 1 533 715 A2**

(12) **EUROPEAN PATENT APPLICATION**

(43) Date of publication:
25.05.2005 Bulletin 2005/21

(51) Int Cl.⁷: **G06F 17/30**

(21) Application number: **04026852.6**

(22) Date of filing: **11.11.2004**

| | |
|---|---|
| (84) Designated Contracting States:<br>**AT BE BG CH CY CZ DE DK EE ES FI FR GB GR HU IE IS IT LI LU MC NL PL PT RO SE SI SK TR**<br>Designated Extension States:<br>**AL HR LT LV MK YU**<br><br>(30) Priority: **20.11.2003 JP 2003390977**<br><br>(71) Applicant: **Pioneer Corporation**<br>**Tokyo-to (JP)** | (72) Inventor: **Hosoi, Masayuki**<br>**Tsurugashima-shi Saitama-ken (JP)**<br><br>(74) Representative: **Grünecker, Kinkeldey, Stockmair & Schwanhäusser Anwaltssozietät**<br>**Maximilianstrasse 58**<br>**80538 München (DE)** |

(54) **Method and apparatus for data classification, method and apparatus for summary data generating, and information recording medium**

(57)     An image processing apparatus (1) generates a person matrix generating table (TBL1) or the like on the basis of additional information representing attribute of a character or the like corresponding to each content data, and updates the table (TBL1), so that a story matrix representing the probabilities of appearance of each character and each appearing location in an arbitrary frame of the contents data is calculated. On the basis of the story matrix, a latent main character or the like of each contents data is determined, and then, story classification of each contents data is determined on the basis of the determination result.

FIG. 1

**Description**

BACKGROUND OF THE INVENTION

1. Field of the Invention

The present invention relates to management of various contents data in a database and, more particularly, to a technical field when contents data are classified in a database.

2. Description of the Related Art

As a conventional method which retrieves data in a database, retrieving methods called full text retrieval, conditional retrieval, and contents retrieval are mainly used. In these retrieving methods, the same code as a code corresponding to a retrieval keyword is retrieved in the text to output data including the keyword as a character string as a retrieval result.

When data such as image data described in a format except for a text format is retrieved, a method called keyword retrieval is exclusively employed. In this keyword retrieval, keywords are set for each data in advance, respectively, and the data are classified by the keywords. Data retrieval is performed on the basis of the keywords.

There is the following prior art: ASCII Corporation, "ASCII Digital Glossary", [online] [retrieval on October 14, 2003], Internet <URL: http://yougo.ascii24.com/>

A predetermined keyword in the keyword retrieval mentioned above is determined by a user who used each data on the basis of the user's sense. For this reason, the keyword is strongly subjective, and objectivity cannot be guaranteed. As a result, accurate retrieval could not be performed.

SUMMARY OF THE INVENTION

The present invention has been made in consideration of the above circumstances, and has as one example of its object to provide an objective index used when data stored in a database is retrieved, and, more particularly, to provide a data classification method, a data classification apparatus, a summary data generating method, a summary data generating apparatus, and an information recording medium which are to classify data to make it possible to accurately retrieve data such as image data described in a format except for a text format.

The invention according to claim 1 relates to a data classification method comprising:

a first process which acquires contents data including an attribute corresponding to a character appearing in contents with plot, an attribute corresponding to a set location appearing as a stage in the contents, and additional information representing at least one of the attributes;
a second process which calculates the appearing probability of appearance of at least one of the character and the set location at an arbitrary point of time in a story line of the contents on the basis of the additional information; and
a third process which classifies the contents data on the basis of the appearing probability.

The invention according to claim 11 relates to a summary data generating method comprising:

the first process which acquires contents data including an attribute corresponding to a character appearing in contents with plot, an attribute corresponding to a set location appearing as a stage in the contents, and additional information representing at least one of the attributes;
the second process which calculates the appearing probability of appearance of at least one of the character and the set location at an arbitrary point of time in a story line of the contents on the basis of the additional information;
the third process which determines at least one of the character serving as the main character in the contents and the set location serving as a main stage in the contents on the basis of the appearance probabilities; and
the fourth process which time-serially connects portions in which the character or the set location determined in the third process appears to generate summary data corresponding to a summary of the contents data.

The invention according to claim 12 relates to a data classification apparatus comprising:

a contents data acquiring device which acquires contents data including an attribute corresponding to a character appearing in contents with plot, an attribute corresponding to a set location appearing as a stage in the contents, and additional information representing at least one of the attributes;

a calculation device which calculates the appearing probability of appearance of at least one of the character and the set location at an arbitrary point of time in a story line of the contents on the basis of the additional information; and

a classification device which classifies the contents data on the basis of the appearing probability.

The invention according to claim 13 relates to a summary data generating apparatus comprising:

a contents data acquiring device which acquires contents data including an attribute corresponding to a character appearing in contents with plot, an attribute corresponding to a set location appearing as a stage in the contents, and additional information representing at least one of the attributes;

a calculation device which calculates the appearing probability of appearance of at least one of the character and the set location at an arbitrary point of time in a story line of the contents on the basis of the additional information;

a determination device which determines at least one of the character serving as the main character in the contents and the set location serving as a main stage in the contents on the basis of the appearance probabilities; and

a summary data generating device which time-serially connects portions in which the character or the set location determined by the determination device appears to generate summary data corresponding to a summary of the contents data.

The invention according to claim 14 relates to a computer readable information recording medium on which a data classification program to classify contents data with a computer is recorded,

the data classification program making the computer function as

a contents data acquiring device which acquires contents data including an attribute corresponding to a character appearing in contents with plot, an attribute corresponding to a set location appearing as a stage in the contents, and additional information representing at least one of the attributes;

a calculation device which calculates the appearing probability of appearance of at least one of the character and the set location at an arbitrary point of time in a story line of the contents on the basis of the additional information; and

a classification device which classifies the contents data on the basis of the appearing probability.

The invention according to claim 15 relates to a computer readable information recording medium on which a summary data generating program to classify contents data with a computer is recorded,

the summary data generating program making the computer function as

a contents data acquiring device which acquires contents data including an attribute corresponding to a character appearing in contents with plot, an attribute corresponding to a set location appearing as a stage in the contents, and additional information representing at least one of the attributes;

a calculation device which calculates the appearing probability of appearance of at least one of the character and the set location at an arbitrary point of time in a story line of the contents on the basis of the additional information;

a determination device which determines at least one of the character serving as a main character in the contents and the set location serving as a main stage in the contents on the basis of the appearance probabilities; and

a summary data generating device which time-serially connects portions in which the character or the set location determined by the determination device appears to generate summary data corresponding to a summary of the contents data.

BRIEF DESCRIPTION OF THE DRAWINGS

FIG. 1 is a block diagram showing the configuration of an image processing apparatus 1 according to a first embodiment;
FIG. 2 is a diagram showing a data format of contents data in the embodiment;
FIG. 3 is a diagram showing the contents of a person matrix generating table TBL1 in the embodiment;
FIG. 4 is a diagram showing the contents of a location matrix generating table TBL2 in the embodiment;
FIG. 5 is a graph showing an experimental calculation result of a person matrix in the embodiment;
FIG. 6 is a graph showing an experimental calculation result of a matrix U in the embodiment;
FIG. 7 is a diagram showing the contents of a story classification table TBL3-k in the embodiment;
FIG. 8 is a flow chart showing processes executed by a story analyzing unit 161 in the embodiment;
FIG. 9 is a diagram showing a modification of a frame constituting contents data;
FIG. 10 is a flow chart showing processes executed by the story analyzing unit 161 in the embodiment;
FIG. 11 is a flow chart showing processes executed by the story analyzing unit 161 in the embodiment;

FIG. 12 is a flow chart showing processes executed by the story analyzing unit 161 in the embodiment;

FIG. 13 is a diagram showing a display example of a screen displayed on a monitor 2 in the embodiment;

FIG. 14 is a diagram showing a display example of a screen displayed on the monitor 2 in the embodiment;

FIG. 15 is a diagram showing the contents of a reproduction history table TBL4 in Application 1;

FIG. 16 is a flow chart showing processes executed by a recording/reproducing unit 162 in the application;

FIG. 17 is a diagram showing the contents of a story comparing table TBL5 in Application 2;

FIG. 18 is a flow chart showing processes executed by the story analyzing unit 161 in the application

FIG. 19 is a flow chart showing processes executed by the story analyzing unit 161 in the application;

FIG. 20 is a flow chart showing processes executed by the story analyzing unit 161 in the application;

FIG. 21 is a flow chart showing processes executed by the story analyzing unit 161 in the application; and

FIG. 22 is a flow chart showing processes executed by the story analyzing unit 161 in Application 3.

DETAILED DESCRIPTION OF THE PREFERRED EMBODIMENTS

Embodiments of the present invention will be described below with reference to the accompanying drawings. The embodiments do not limit the present invention, and can be arbitrarily changed within the range of the spirit and scope of the present application.

[1] Embodiment

[1.1] Configuration of Embodiment

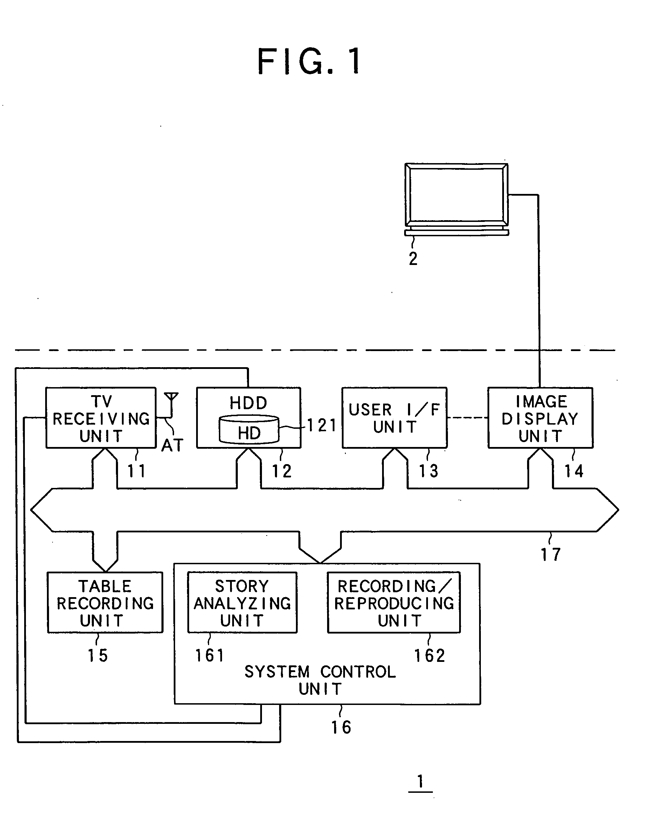

The configuration of an image processing apparatus 1 according to the embodiment of the present invention will be described with reference to FIG. 1. FIG. 1 is a block diagram showing the configuration of the image processing apparatus 1 according to the embodiment.

As shown in FIG. 1, the image processing apparatus 1 according to the embodiment comprises a TV receiving unit 11, a hard disk drive 12 (to be abbreviated as an "HDD 12" hereinafter) having a hard disk 121 (to be abbreviated as an "HD 121" hereinafter), a user interface unit 13 ("interface" will be abbreviated as "I/F" hereinafter), an image display unit 14, a table recording unit 15, a system control unit 16, and a data bus 17 which interconnects these components.

For example, the hard disk 121 of the embodiment constitutes a "recording medium" of the present invention, and the TV receiving unit 11, the HDD 12, and the system control unit 16 constitutes a "contents data acquiring device". Also, for example, the system control unit 16 of the embodiment constitutes the "calculation device", the "classification device" and the "summary data generating device" of the present invention. The image display unit 14 and a monitor 2 constitute the "display device".

The image processing apparatus 1 according to the embodiment is an apparatus which receives terrestrial digital broadcasting, records contents data included in the broadcasting wave on the HDD 12, and reproduce the contents data. The image processing apparatus 1 also classifies the contents data recorded on the HDD 12 according to information called story matrix data to realize the convenience of retrieval or the like of each contents data.

The story matrix data is information corresponding to the contents of the story of each contents data, and the information will be described later in detail. A story mentioned in the embodiment means the tale of contents corresponding to each contents data.

Each element will be described below.

The TV receiving unit 11 is a receiving device for terrestrial digital broadcasting, and is tuned at a frequency selected by a user, performs a demodulating process for a broadcasting wave received through a receiving antenna AT, and supplies the contents data obtained by the demodulation to the system control unit 16.

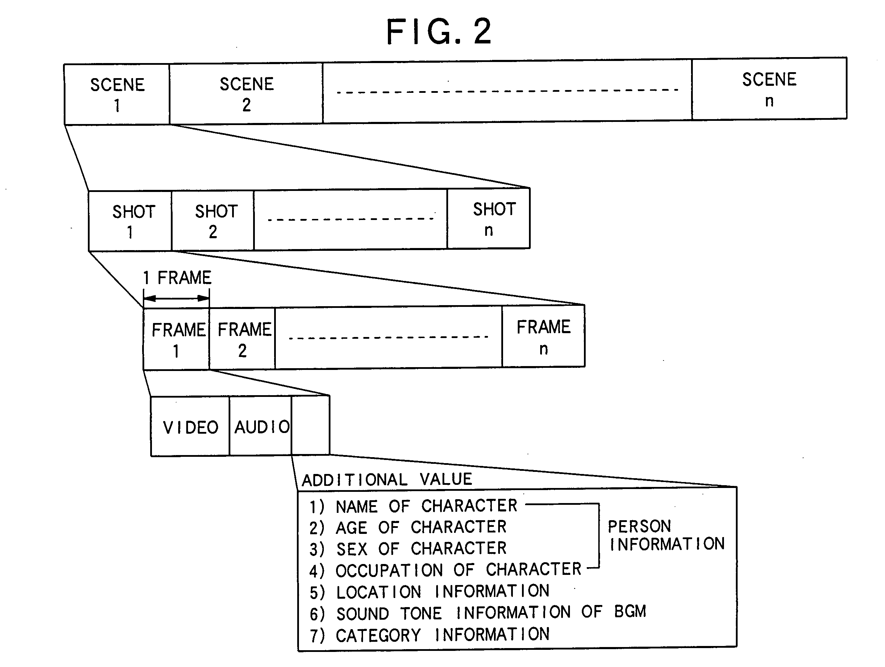

In the embodiment, contents data included in a broadcasting wave has a data format shown in FIG. 2.

As shown in FIG. 2, in the embodiment, the contents data is constituted by data corresponding to a plurality of frames. Each contents data is divided into a plurality of scenes each serving as a scene of a story constituting a tale, and each scene is divided into a plurality of shots by switching of camera angles and the like.

The number of frames constituting each shot and the number of shots constituting each scene are arbitrarily set, and are determined by a creator of the contents data in generation of the contents data.

On the other hand, the data corresponding to each frame includes image data, audio data, and additional information corresponding to the frame. The additional information is information representing the attribute of the frame, and includes personal information representing the name, age, sex, occupation, and the like of a person or character (each of the person and the character will be called "person" hereinafter) appearing on the frame on a story, and location information representing a location name serving as a stage on the story setting of the frame and years corresponding to the set location. The additional information also includes category information representing categories such as "drama" and "documentary" to which the contents data belongs to and, if a BGM is used in the frame, sound tone information representing sound tone of the BGM.

For example, when two persons, "person a" and "person b" appear in the frame, and when a location serving as the stage of the scene is "house of a", the additional information includes not only personal information representing "person a" and "person b", which are characters, but also information, such as "house of a" as location information.

Data formats of image data, audio data, and additional information are arbitrarily set, however, in the embodiment, it is assumed that the image data is described in MPEG (Moving Picture Experts Group) format, that the audio data is described in AC-3 (Audio Code number 3) format, and that the additional information is described in XML format (extensible Markup Language).

The user I/F unit 13 has an operation unit or an external remote controller constituted by a keyboard (not shown), and the user I/F unit 13 outputs an input signal corresponding to an input operation performed by a user to the system control unit 16.

The image display unit 14 decodes the contents data recorded on the HD 121 of the HDD 12 under the control of the system control unit 16 to convert the contents data into a moving image signal and an audio signal and outputs those signals to the monitor 2. As a result, a moving image corresponding to the contents data is displayed on the monitor 2, and sound corresponding to the contents data is output from the monitor 2.

The table recording unit 15 is constituted by, for example, an internal memory such as an EEPROM or an SRAM, a detachable external memory, or the like, and a table required to execute various processes in the image processing apparatus 1 is stored in the table recording unit 15.

The system control unit 16 has a CPU (Central Processing Unit) (not shown), a ROM (Read Only Memory), a RAM (Random Access Memory), an EEPROM, and the like, and the respective units of the image processing apparatus 1 is controlled by executing various applications stored in the ROM

More specifically, as shown in FIG. 1, the system control unit 16 has a story analyzing unit 161 and a recording/reproducing unit 162.

When contents data is recorded on the HDD 12, the story analyzing unit 161 executes a story matrix data generating process corresponding to the contents data, and performs a conversion process for story matrix data obtained as a result of the generating process and then execute a story classification process of the contents data.

The story matrix data, as described above, is information corresponding to story contents which form a tale corresponding to each content data, and is constituted by person matrix data and location matrix data. The person matrix data is data corresponding to a matrix (the matrix will be called a "person matrix" hereinafter) obtained by weighting every person and character appearing in a story of each content data, and is determined on the basis of the numbers of frames in which each person appear. On the other hand, the location matrix data is data corresponding to a matrix (the matrix will be described as a "location matrix" hereinafter) obtained by weighting every location serving as a stage in a story of each contents data, and is determined on the basis of the numbers of frames in which each location serving as a stage in a story corresponding to the contents data serve as stages.

Processes executed by the story analyzing unit 161 will be described below.

[Story Matrix Data Generating Process]

In this story matrix generating process, the story analyzing unit 161 reads the contents data recorded on the HD 121 to develop the contents data on a RAM (not shown). The story analyzing unit 161 executes the following processes to generate person matrix data and location matrix data. Both the processes, which will be described later, are simultaneously performed by the story analyzing unit 161.

<Generation of Person Matrix Data>

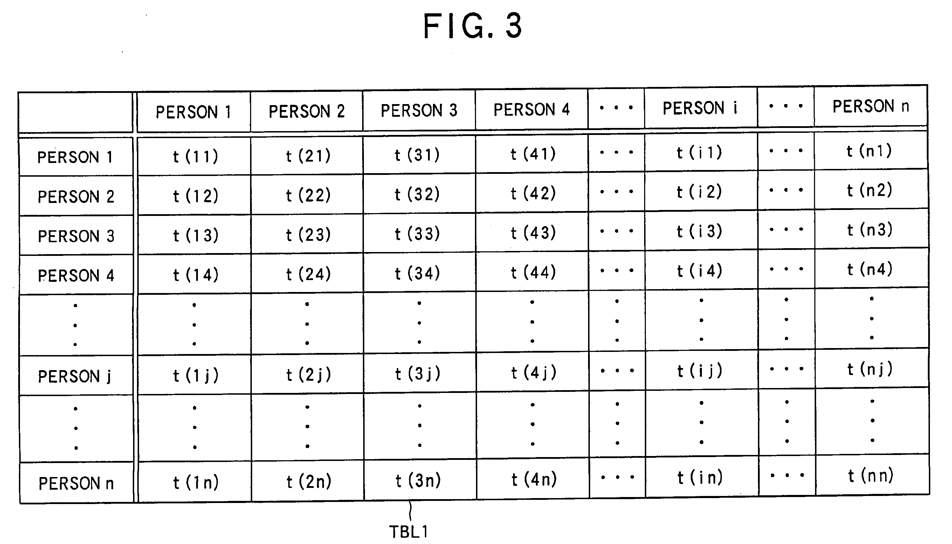

In generation of person matrix data, the story analyzing unit 161 retrieves contents data developed on the RAM to extract all person names appearing in the story from the person information in the additional information contained in the contents data. The story analyzing unit 161 then generates a person matrix generating table TBL1 shown in FIG. 3 in the table recording unit 15 on the basis of the extracted person names.

In FIG. 3, rows and columns mean the person names extracted by the above process, that is, person names appearing in the story corresponding to the contents data. Therefore, in the example shown in FIG. 3, it is understood that n persons including "person 1", "person 2", "person 3",..., "person n" appear in the story of the contents data.

In a field at which each row and each column cross in the person matrix generating table TBL1, a counter is arranged. The person matrix generating table TBL1 is updated by incrementing the counter.

More specifically, the person matrix generating table TBL1 is updated through the following processes.

Firstly, the story analyzing unit 161 sequentially extracts person names included in the person information from the start frame of the contents data from which the person matrix data is generated to increment the counters in the fields at which the rows and the columns corresponding to the person names cross.

(i) In the case that one person appears in the frame

For example, when a character is only "person 1", the story analyzing unit 161 increments a counter at t(11) by "1" in the person matrix generating table TBL1.

(ii) In the case that a plurality of persons appear in the frame

For example, when characters are "person 1" and "person 2", the story analyzing unit 161 increments counters at t(11), t(22), t(12), and t(21) by "1" respectively in the person matrix generating table TBL1.

The increments of the counters are sequentially performed until the increment in the final frame is ended, thereby updating of the person matrix generating table TBL1 is completed. Since these processes are performed to update the person matrix generating table TBL1, the counters stored in each fields of the table TBL1 indicate a) the total number of appearing frames in which the characters appear in the story, and b) the number of frames in which the characters appear together with other characters, respectively.

Since the number of frames means the number of times occupied in the story corresponding to the contents data, the number of frames correspond to a) the total hours for which each character appeared in the story and b) the hours for which each character appeared together with other characters.

As described above, upon completion of updating of the person matrix generating table TBL1, the story analyzing unit 161 assigns each counter value "t(ij)" stored in the person matrix generating table TBL1 to the following (Equation 1).

[Equation 1]

$$ \mathrm{T\,t}\,(j) \;=\; \sum_{i=1}^{n}\; \mathrm{t}\,(ij) \qquad (j{=}1,2,.....n) $$

In (Equation 1), the right-side is a sum of values in the row direction of the person matrix generating table TBL1 and means the total number of frames in which "person j" appears. When the arithmetic calculation is ended for each row, the story analyzing unit 161 assigns the calculated Tt(ij) to (Equation 2) to calculate a (ij). On the basis of the calculation result, a person matrix "A" expressed by (Equation 3) is calculated, and data corresponding to the matrix A is generated.

[Equation 2]

$$ a\,(ij) = t\,(ij)/\mathrm{T}\,t\,(j) \qquad (i,\,j{=}1,2,.....,n) $$

[Equation 3]

$$ \mathrm{A} \;=\; \begin{pmatrix} a(11) & \cdots\cdots & a(n1) \\ \cdot & & \cdot \\ \cdots\cdots & a(ij)\cdots\cdots & \cdot \\ a(1n) & \cdots\cdots & a(nn) \end{pmatrix} $$

Parameters a(ij) of the person matrix "A" means a ratio of the number of frames in which "person j" and "person i" simultaneously appear to the total number of frames in which "person j" appears, that is, the probability of appearance of "person j " who appears in frames in which "person i" appears. Therefore, a(ij) (i = 1, 2,..., n) corresponding to "person j" satisfies the following equation:

[Equation 4]

$$\sum_{i=1}^{n} a(ij) = 1 \quad (j=1,2,\ldots\ldots,n)$$

<Generation of Location Matrix Data>

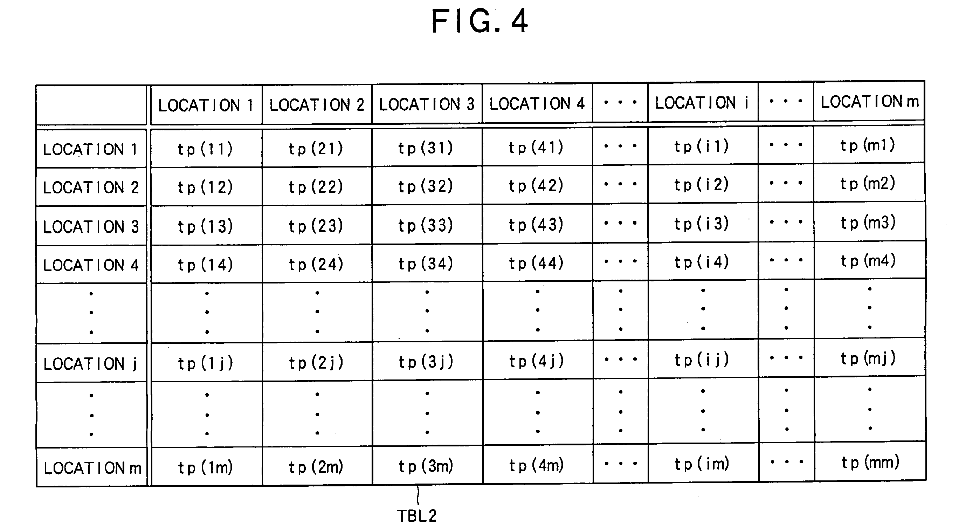

In generation of location matrix data, the story analyzing unit 161 retrieves the contents data developed on the RAM to extract all location names serving as stages in the story from the location information in the additional information included in the contents data. The story analyzing unit 161 generates a location matrix generating table TBL2 shown in FIG. 4 in the table recording unit 15 on the basis of the extracted location names.

In FIG. 4, rows and columns mean the location names extracted by the above process, that is, location names serving as stages in the story corresponding to the contents data. Therefore, in the example shown in FIG. 4, it is understood that m locations including "location 1", "location 2", "location 3",..., "location m" appear in the story of the contents data.

In a field at which each row and each column cross in the location matrix generating table TBL2, a counter is arranged as in the person matrix generating table TBL1. The location matrix generating table TBL2 is updated by incrementing the counter.

The updating method used here is basically the same as that of the process performed when the person matrix generating table TBL1 is updated, however it is different only in increment references of the counters as follows. That is,

(i) In case of the first frame of the contents data In the location matrix generating table TBL2, a counter corresponding to a location serving as a stage is incremented by "1". For example, when the stage is "location 1", the story analyzing unit 161 increments only the counter at tp(11) by "1" in the location matrix generating table TBL2.
(ii) In case of frames subsequent to the first frame

a) When locations are not changed from the beginning

In the location matrix generating table TBL2, a counter corresponding to a location serving as a stage is incremented by "1". For example, when the stage is "location 1", the story analyzing unit 161 increments only a counter at tp(11) by "1" in the location matrix generating table TBL2.

b) In case of frames after locations are changed at least once after the start

In the location matrix generating table TBL2, counters corresponding to location names set before and after the change are incremented by "1" respectively. For example, when the stage is changed from "location 1" to "location 2", the story analyzing unit 161 increments counters at tp(11), tp(12), tp(21), and tp(22) by "1" respectively in the location matrix generating table TBL2.

c) In case of frame after location change, when the state of the location continues

In the location matrix generating table TBL2, counters corresponding to location names set before and after the change are incremented by "1" respectively. For example, after the stage changes from "location 1" to "location 2", when the state of "location2" continues, the story analyzing unit 161 increments not only a counter at tp(22) but also counters at tp(12) and tp(21) by "1" respectively in the location matrix generating table TBL2.

When the location matrix generating table TBL2 is updated through the above processes, the story analyzing unit 161 assigns values stored in the location matrix generating table TBL2 to (Equation 5).

[Equation 5]

$$T t p(j) = \sum_{i=1}^{m} t p(ij) \qquad (j=1,2,.....,m)$$

In (Equation 5), the right-side is a sum of values in the row direction of the location matrix generating table TBL2, and means the total number of frames in which "location j" appears. On the basis of the calculation result, the story analyzing unit 161 calculates each parameter on the basis of (Equation 6) as in the generation of the person matrix data to calculate a location matrix "B" expressed by (Equation 7), so that the location matrix data is generated.

[Equation 6]

$$b(ij) = t p(ij)/T t p(j) \qquad (i,j=1,2,.....,m)$$

[Equation 7]

$$B = \begin{pmatrix} b(11) & \cdot \cdot \cdot \cdot \cdot & b(m1) \\ \cdot & & \cdot \\ \cdot \cdot \cdot \cdot & b(ij) \cdot \cdot \cdot & \cdot \\ b(1m) & \cdot \cdot \cdot \cdot \cdot & b(mm) \end{pmatrix}$$

Note that, with respect to b(ij), like the a(ij), a relation is expressed by the following equation:

[Equation 8]

$$\sum_{i=1}^{m} b(ij) = 1 \qquad (j=1,2,........,m)$$

[Story Matrix Conversion Process]

The person matrix data (Equation 3) and the location matrix data (Equation 7) obtained by the above generation processes express transition probability matrixes in a Markov chain, respectively.

The story analyzing unit 161 calculates convergent values (stationary distributions) of the transition probability matrixes. Values obtained by maximizing ($\infty$) values k to an infinitely large value in the following conversion expressions (Equation 9) and (Equation 10) are used as the convergent values (stationary distributions). However, the values experientially almost converge if the values are about "30" or more. For this reason, in this embodiment, as the value k, a value of "30" or more is set. It is known that, in the Markov chain, the convergent values are matrixes in which the values of each row are equal to each other as expressed in (Equation 9) and (Equation 10).

[Equation 9]

$$U = \lim_{k \to \infty} A^k = \begin{pmatrix} \alpha(1) & \cdots & \alpha(n) \\ & \alpha(i) & \\ \alpha(1) & \cdots & \alpha(n) \end{pmatrix}$$

[Equation 10]

$$V = \lim_{k \to \infty} B^k = \begin{pmatrix} \beta(1) & \cdots & \beta(m) \\ & \beta(i) & \\ \beta(1) & \cdots & \beta(m) \end{pmatrix}$$

In this (Equation 9), parameters $\alpha(i)$ denote the probabilities of appearance of each person in each frame, and parameters $\beta(i)$ in (Equation 10) denote the probabilities of each location to be set as a stage in each frame. Therefore, both matrixes U and V are calculated by the (Equation 9) and (Equation 10), so a person having the highest probability of appearance among all the persons appearing in the story corresponding to the contents data and a location having the highest probability of appearance can be specified. By calculating matrixes U and V, this also means that a person (to be referred to as a "latent main character" hereinafter) supposed as a main character in the story of the contents data and a location (to be referred to as a "latent central location" hereinafter) supposed as a main stage in the story can be specified.

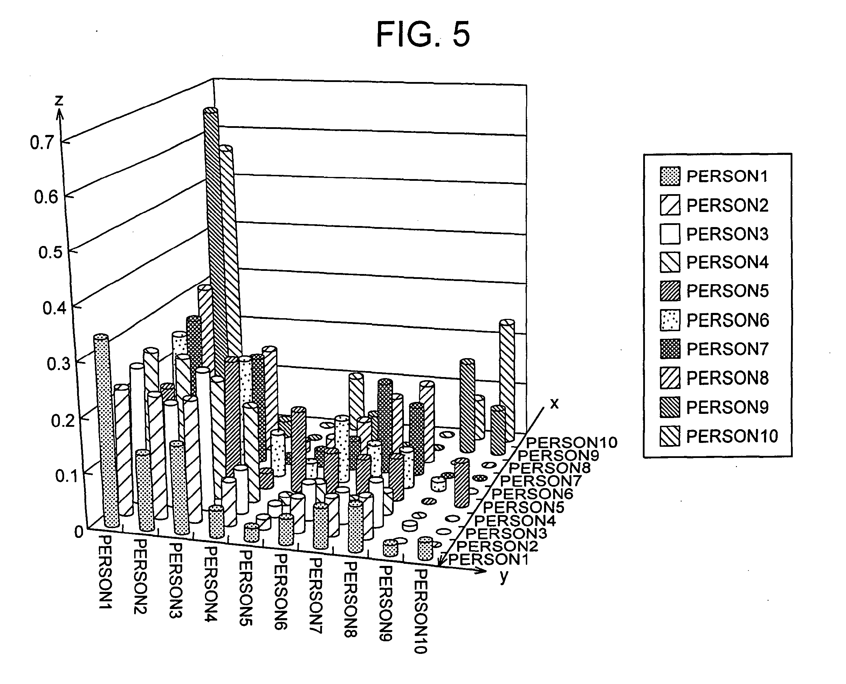

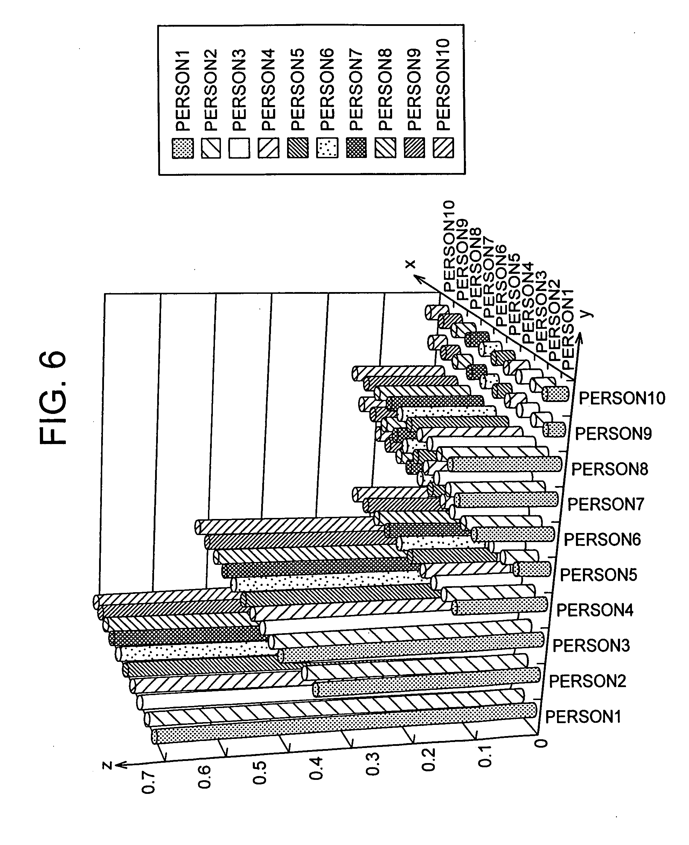

A calculation result of (Equation 3) and a relation obtained by assigning the calculation result to (Equation 9) will be described below in accordance with FIGS. 5 and 6 by using the person matrix data as an example. FIG. 5 is obtained by graphing an experiment result obtained when the story analyzing unit 161 calculates the person matrix "A" for contents data in according to (Equation 3), and FIG. 6 is obtained by graphing a calculation result obtained by assigning the person matrix "A" to (Equation 9) . In each of these graphs, an x-y plane corresponds to rows and columns in the person matrix "A", and a z-axis indicates values corresponding to each parameter in the matrix A.

As shown in FIG. 5, the person matrix "A" denotes a random value. In contrast to this, when the personmatrix "A" is assigned to (Equation 9), a convergent value (stationary distribution) of the person matrix "A" is calculated, and the final probabilities of appearance of each person in the story can be obtained. Therefore, in the example shown in FIG. 6, "person 1" appears in the story at the highest probability, and as a result, "person 1" can be specified as a latent main character.

In this process, the story analyzing unit 161 calculates root mean squares (RMS) in accordance with the following (Equation 11) and (Equation 12) to generate data corresponding to the root mean squares.

[Equation 11]

$$dA = \sqrt{\sum_{i,j=1}^{n} \{a(ij)-\alpha(j)\}^2 / n^2}$$

[Equation 12]

$$dB = \sqrt{\sum_{i,j=1}^{n} \{b(ij)-\beta(j)\}^2 / n^2}$$

Values dA and dB are defined as indexes used when it is decided whether contents data can be classified. The values will be described later.

[Story Classification Process]

The story analyzing unit 161 specifies a latent main character in a story corresponding to the contents data on the basis of the calculation results of (Equation 9) and (Equation 11), and classifies the contents data in several person groups. The story analyzing unit 161 also specifies a latent central location in the story corresponding to the contents data on the basis of the calculation results of (Equation 10) and (Equation 12), and classifies the contents data in several location groups.
Classification methods used in this case will be described below.

(i) Classification of Person Group

<Person Group aa>

This "person group aa" is a group set when the value dA corresponding to the contents data does not exceed a threshold value RA. As described above, in the embodiment, the value dA means a root mean square, and the value which decreases and is close to "0" means that a difference between the initial value and the convergent value is not large.
Even though the value dA corresponding to the contents data exceeds the threshold value RA, in the case where each parameter $\alpha(i)$ of the matrix U takes only a small value with respect to all the characters, and all the characters have only average probabilities of appearance, it is difficult to specify a latent main character.
Therefore, the story analyzing unit 161 classifies the contents data in the "person group aa" without exception when the value dA does not exceed the threshold RA and when there is no value $\alpha(i)$ in the matrix U which exceeds a threshold value $L\alpha$ which will be described later. The contents data belonging to the group is supposed as a drama or the like which has a flat story and a poor plot.

<Person Group ab>

When the value dA corresponding to the contents data exceeds the threshold value RA, the difference between the calculated value of the matrix U and the initial value is large, so that a latent main character can be specified, and the contents data can be classified. Therefore, the story analyzing unit 161 compares each value $\alpha(i)$ with threshold values $H\alpha$ and $L\alpha$.
The value $H\alpha$ is set as a value larger than the value $L\alpha$, however, these values are arbitrarily set. In the embodiment, to perform a concrete explanation, the explanation will be made on the assumption that the threshold value $H\alpha$ and the threshold value $L\alpha$ are set at "0.25" (probability of appearance: 25%) "0.13" (probability of appearance:

13%), respectively.

(Person Group ab1)

In the matrix U, when the values $\alpha(i)$ corresponding to each person include only one character having a value exceeding the threshold value H$\alpha$, the story analyzing unit 161 classifies the contents data in "person group ab1". Although, as described above, each value $\alpha(i)$ means the probabilities of appearance of persons in frames, the contents data belonging to the group is supposed as data in which the probability of appearance of one person is extraordinarily high and which has one main character. For this reason, for example, if the contents data belonging to "group ab1" is of a drama, the drama is supposed as a drama in which a main character achieves a great success.

(Person Group ab2)

In the matrix U, when the values $\alpha(i)$ corresponding to each person include two characters each having a value exceeding the threshold value H$\alpha$, the story analyzing unit 161 classifies the contents data in "person group ab2". The contents data belonging to the group is supposed as data in which the probabilities of appearance of two persons are extraordinarily high and which has two main characters. For this reason, for example, if the contents data belonging to the group is of a drama, the drama is supposed as a drama in which the history of two persons are traced as in a love story.

(Person Group ab3)

In the matrix U, when the values $\alpha(i)$ corresponding to each person include three or more characters each having a value exceeding the threshold value H$\alpha$, the story analyzing unit 161 classifies the contents data in "person group ab3". The contents data belonging to the group is supposed as data in which three or more persons are main characters. For example, if the contents data belonging to the group is of a drama, the drama is supposed as a drama in which a plurality of main characters appear as in a story of fighters for justice.

(Person Group ab4)

In the matrix U, when the values $\alpha(i)$ corresponding to each person include no character having a value exceeding the threshold value H$\alpha$ and only one character having a value exceeding the threshold value L$\alpha$, the story analyzing unit 161 classifies the contents data in "person group ab4". The contents data belonging to the group is supposed as data in which any character has low probability of appearance and in which only one person appears for a certain amount of time, for example, if the contents data is of a drama, the drama is supposed as a drama in which, although a main character is present at any rate, secondary characters are very frequently appear.

(Person Group ab5)

In the matrix U, when the values $\alpha(i)$ corresponding to each person include no character having a value exceeding the threshold value H$\alpha$ and two characters each having a value exceeding the threshold value L$\alpha$, the story analyzing unit 161 classifies the contents data in "person group ab5". The contents data belonging to the group is supposed as data in which all characters have low probabilities of appearance and in which two persons appear in a relatively large number of scenes, for example, if the contents data is of a drama, the drama is supposed as a love story in which secondary characters take active roles in many scenes and in which the relationships between the characters are complicated.

(Person Group ab6)

In the matrix U, when the values $\alpha(i)$ corresponding to each person include no character having a value exceeding the threshold value H$\alpha$ and three or more characters each having a value exceeding the threshold value L$\alpha$, the story analyzing unit 161 classifies the contents data in "person group ab6". The contents data belonging to the group is supposed as data in which all characters have low probabilities of appearance, and if the contents data is of a drama, the drama is supposed, for example, as comedy drama without any main character since three or more persons have values $\alpha(i)$ exceeding the threshold value L$\alpha$.

(ii) Classification of Location Group

<Location Group aa>

The "location group aa" is set when a value dB corresponding to the contents data dose not exceed a threshold value RB and when values exceeding a threshold value Lβ are not present among parameters β(i) of the matrix V. As described above, when the value dB is very small, and when each parameter β(i) of the matrix V takes only small values with respect to all the locations, it is difficult to specify a latent central location. Therefore, in this case, the story analyzing unit 161 classifies the contents data in the "location group aa" without exception.

<Location Group ab>

When the value dB corresponding to the contents data exceeds the threshold value RB, the story analyzing unit 161 compares each value β(i) with the threshold values Hβ and Lβ . Although the value Hβ is set as a value larger than the value Lβ, these values are arbitrarily set. The explanation of these values will be made on the assumption that the threshold values Hβ and Lβ are set at "0.25" and "0.13", respectively.

The classification is the same as in the classification of the person groups, and there are the following six groups:

a) in the matrix V, when the values β(i) corresponding to each location include only one location having a value exceeding the threshold value Hβ: location group ab1;
b) in the matrix V, when the values β(i) include two locations each having a value exceeding the threshold value Hβ: location group ab2;
c) in the matrix V, when the values β(i) include three or more locations each having a value exceeding the threshold value Hβ: location group ab3;
d) in the matrix V, when the values β(i) include no location having a value exceeding the threshold value Hβ and only one location having a value larger than the threshold value Lβ: location group ab4;
e) in the matrix V, when the values β(i) include no location having a value exceeding the threshold value Hβ and two locations each having a value larger than the threshold value Lβ: location group ab5; and
f) in the matrix V, when the values β(i) include no location having a value exceeding the threshold value Hβ and three or more locations each having a value larger than the threshold value Lβ: location group ab6.

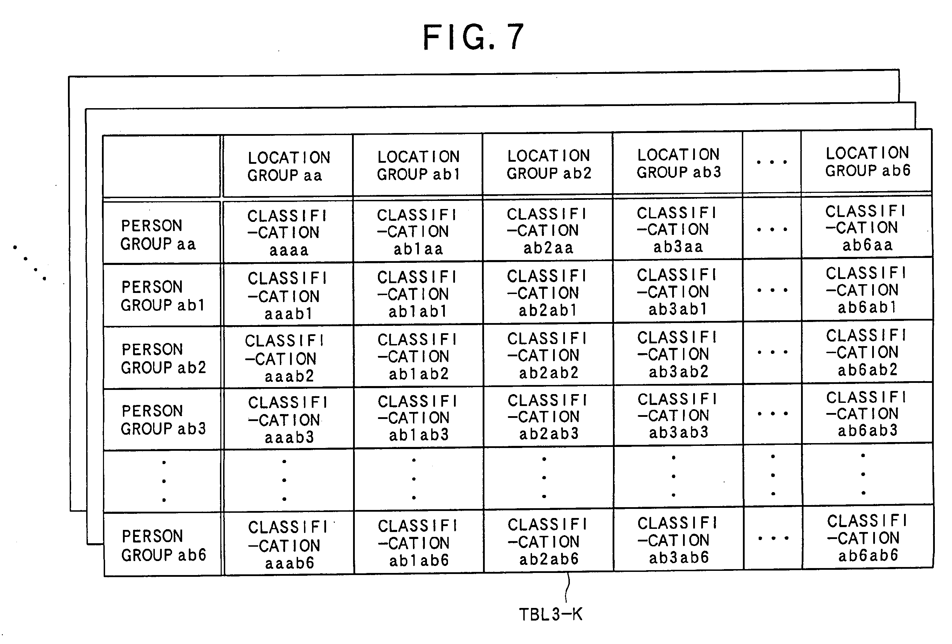

When the above processes are executed to determine a person group and a location group corresponding to each content data, the story analyzing unit 161 determines a story classification of the contents data. In order to realized the function, in the table recording unit 15 according to the embodiment, story classification tables TBL3-k (k = 1, 2,..., n) shown in FIG. 7 are stored.

As shown in FIG. 7, the story classification tables TBL3-k are arranged, for example, in units of categories of contents data such as a drama and a documentary. In each story classification table TBL3-k, a story classification is stored in association with a combination of a person group and location group.

When story classification is actually performed, the story analyzing unit 161 determines a story classification table TBL3-k to be used on the basis of the category information in the additional information included in the contents data to be classified, and selects a story classification corresponding to a combination of a person group and a location group of the contents data in the story classification table TBL3-k.

For example, in the case shown in FIG. 7, when contents data subjected to a story classification belongs to the "person group ab2" and the "location group ab3", the story analyzing unit 161 classifies the contents data in a story classification "classification ab3ab2". The story analyzing unit 161 then outputs a control signal including the story classification and a category name which are determined as a result of the above process to the HDD 12. As a result, the contents data, the story classification, and the category name are recorded on the HD 121 in association with each other, and a database is structured in the HD 121.

The story classifications can be arbitrarily defined. However, for example, in the "classification ab3ab2" in the category "drama", the contents data is defined as a "love story including three locations as stages" to make it possible to appropriately perform story classification.

On the other hand, the recording/reproducing unit 162 controls recording and erasing of contents data for the HDD 12. More specifically, the recording/reproducing unit 162 performs reservation of recording of contents data in accordance with an input signal corresponding to an input operation supplied from the user I/F unit 13 by a user. When the time comes for the recording reservation, the recording/reproducing unit 162 outputs a change signal of tuning frequency to the TV receiving unit 11 through the data bus 17 and transmits a control signal to HDD 12. As a result, on-air contents data received through the TV receiving unit 11 are sequentially recorded on the HD 121.

The recording/reproducing unit 162 controls reproduction of the contents data recorded on the HDD 12. More specifically, the recording/reproducing unit 162 outputs a control signal to the image display unit 14 in accordance with an input signal transmitted from the user I/F unit 13 and corresponding to an input operation by a user. When the control signal is received, the image display unit 14 reads the contents data recorded on the HDD 12 to perform a display process. As a result, the image corresponding to the contents data or the like is displayed on the monitor 2.

In this embodiment, as a characteristic item, the recording/reproducing unit 162 generates and display data corresponding to a reproduction candidate list screen in accordance with a story classification corresponding to each content data to make it easy for a user to retrieve the contents data recorded on the HD 121 when the contents data recorded on the HD 121 is reproduced. For this reason, contents retrieval based on an objective index is performed to make it possible to select and reproduce contents taken along the genuine intention of the user.

The HDD 12 includes the HD 121, and reads and writes data from/in the HD 121 under the control of the system control unit 16. In the HD 121, contents data and story classifications corresponding to the contents data are recorded in association with each other. As a result, a database of the contents data is structured in the HD 121.

[1.2]Operation of Embodiment

An operation of the embodiment will be described below.

The story analyzing unit 161 mentioned above determines a story classification corresponding to each content data at an arbitrary timing. In the embodiment, it is assumed that the story classification is determined in recording of the contents data.

(1) Schematic Operation in Contents Data Recording

An operation performed when contents data is recorded in the image processing apparatus 1 according to the embodiment will be described below.

Firstly, when a user operates the user I/F unit 13 to turn on the power supply of the image processing apparatus 1, contents data received by the TV receiving unit 11 is decoded by the image display unit 14 under the control of the recording/reproducing unit 162 of the system control unit 16 to supply the decoded data to the monitor 2 as an image signal or the like. As a result, an image corresponding to on-air contents is displayed on the monitor 2.

In this state, when the on-air contents are to be recorded, the user needs to perform a predetermined operation to an operation unit (not shown) or an external remote controller (not shown) of the user I/F unit 13. The operation contents at this time are arbitrarily determined. For example, a recording reservation button may be arranged on the operation unit or the external remote controller and when the button is depressed, an image corresponding to a reservation screen is output to the monitor 2 to designate recording reservation time or the like on the screen. In addition, a liquid crystal display unit may be arranged on the operation unit or the external remote controller of the user I/F unit 13 to display recording reservation time, a broadcasting channel, and the like on the display unit for designation thereof, so that recording reservation is performed.

As a result of the operation, when a user designates recording date and time or the like to perform the recording reservation of the contents data, the recording/reproducing unit 162 records the contents data on the HDD 12 at the date and time. Since the operation performed at this time is the same as that in a conventional HD recorder or the like, a detailed description thereof will be omitted.

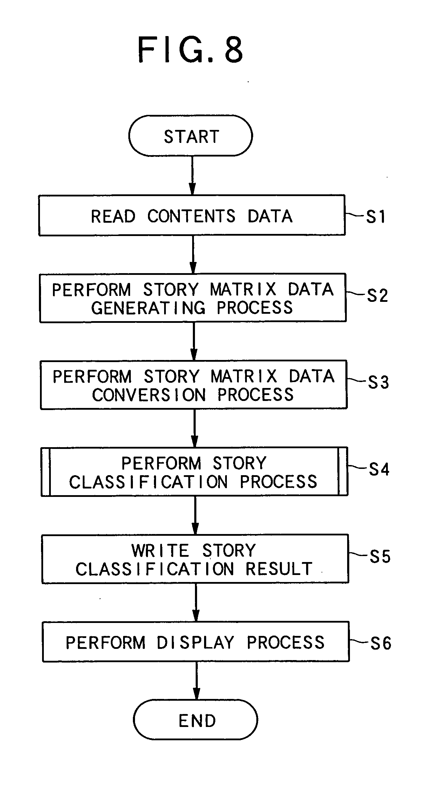

When the contents data is recorded on the HDD 12 as described above, the story analyzing unit 161 executes a story analyzing process shown in FIG. 8.

In this process, the story analyzing unit 161 outputs a control signal to the HDD 12 to read the contents data recorded by the recording reservation, on the HD 121 (step S1). As a result, the contents data is read by the HDD 12, supplied to the system control unit 16, and developed on the RAM (not shown) in the system control unit 16.

The story analyzing unit 161 executes the story matrix data generating process mentioned above on the basis of the contents data read as described above to generate person matrix data and location matrix data (step S2).

The story analyzing unit 161 executes a matrix conversion process of the person matrix data and the location matrix data generated in step S2 (step S3). At this time, the story analyzing unit 161 assigns each parameter of a matrix corresponding to the data generated in step S2 to the (Equation 9) to (Equation 12) to calculates values dA and dB to generate data corresponding to these values as well as calculating matrixes U and V, and data corresponding to the matrixes U and V are generated.

The story analyzing unit 161 then executes the story classification process (step S4). A concrete operation in the story classification process will be described later.

Upon completion of the story classification process related to the contents data, the story analyzing unit 161 outputs a control signal including the story classification serving as the result of the process to the HDD 12 (step S5) to end the process. At this time, for example, when the contents data used to determine the story classification belongs to "person group ab2" and "location group ab3" in the example shown in FIG. 7, the story analyzing unit 161 classifies the contents data in a story classification "classification ab3ab2" and outputs a control signal including the story classification and the category name to the HDD 12.

As a result of the above process, the contents data, the story classification, and the category name are recorded on the HDD 121 in association with each other to form a database.

On the other hand, upon completion of the process, the story analyzing unit 161 outputs the classification result and the data including, for example, a character string such as "process is ended" to the image display unit 14 (step S6) to end the process. As a result, an image corresponding to the data is displayed on the monitor 2.

(2) Concrete Operation of Story Matrix Generating Process

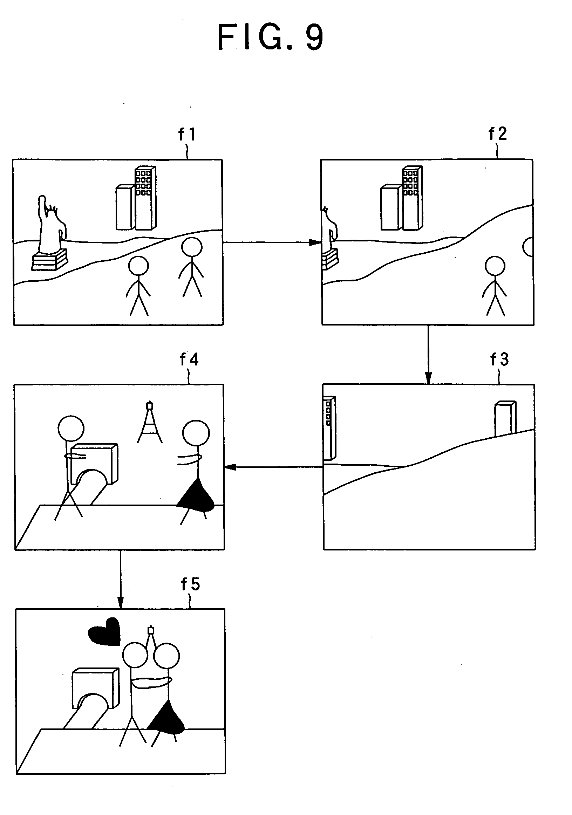

A concrete operation of the story matrix generating process executed in step S2 in FIG. 8 will be described below with reference to FIG. 9. In FIG. 9, it is assumed that frames sequentially progress in an order: a frame f1, a frame f2, ..., a frame f5, and it is assumed that the contents data is started from the frame f1. In addition, it is assumed that characters in the frames f1 and f2 are defined as "person 1" and "person 2", respectively, and it is assumed that characters in the frames f4 and f5 are defined as "person 3" and "person 4". Furthermore, it is assumed that a location serving as a stage of the frames f1 to f3 is defined as "location 1", and it is assumed that a location serving as a stage of the frames f4 and f5 is defined as "location 2".

In this process, the story analyzing unit 161 retrieves the contents data developed on the RAM to extracts all person names and all location names appearing in a story from the person information and the location information in the additional information included in the contents data, and generate the person matrix generating table TBL1 and the location matrix generating table TBL2 in the table recording unit 15.

Upon completion of the generation of the tables, the story analyzing unit 161 extracts the person information and the location information from the data corresponding to the frame f1 on the RAM, and updates the counter in the person matrix generating table TBL1 and the location matrix generating table TBL2 in accordance with the person names and location names included in these information.

In case of the operation, the person information or the like in the additional information corresponding to the frame f1 includes "person 1" and "person 2" as person names and "location 1" as a location name. For this reason, the story analyzing unit 161 increments counters $t(11)$, $t(22)$, $t(12)$, and $t(21)$ by "1" respectively in the person matrix generating table TBL1, and increments a counter at $tp(11)$ by "1" in the location matrix generating table TBL2. In the similar manner, in the frame f2, the story analyzing unit 161 increments the counters at $t(11)$, $t(22)$, $t(12)$, and $t(21)$ by "1" respectively in the person matrix generating table TBL1, and increments the counter at $tp(11)$ in the location matrix generating table TBL2 by "1".

Next, the story analyzing unit 161 updates the person matrix generating table TBL1 and the location matrix generating table TBL2 on the basis of the additional information corresponding to the frame f3. In case of the operation, since there is no character in the frame f3, the story analyzing unit 161 dose not increment any counter in the person matrix generating table TBL1, but increments only a counter at $tp(11)$ by "1" in the location matrix generating table TBL2.

Furthermore, the story analyzing unit 161 updates the person matrix generating table TBL1 and the location matrix generating table TBL2 on the basis of the additional information of the frame f4. In case of the frame f4, since a location is different from the location serving as the stage of the frame f3, the story analyzing unit 161 increments counters $tp(11)$, $tp(12)$, and $tp(21)$ respectively by "1" as well as incrementing a counter $tp(22)$, in the location matrix generation table TBL2. Also, in the person matrix generating table TBL1, the story analyzing unit 161 increments counters at $t(33)$, $t(44)$, $t(34)$, and $t(43)$ by "1" respectively.

The person matrix generating table TBL1 and the location matrix generating table TBL2 are updated on the basis of the additional information of the frame f5. Since the location of the frame f5 is not different from the location of the frame f4, the story analyzing unit 161 increments the counters at $tp(22)$, $tp(12)$, and $tp(21)$ by "1" respectively in the location matrix generating table TBL2, and dose not increment the counter at $tp(11)$. On the other hand, in the person matrix generating table TBL1, since the character of the frame f4 does not change, the counters at $t(33)$, $t(44)$, $t(34)$, and $t(43)$ are incremented as in the frame f4.

Thereafter, the same process is executed for all the frames constituting the contents data. Upon completion of updating of the person matrix generating table TBL1 and the location matrix generating table TBL2, the story analyzing unit 161 assigns counter values $t(ij)$ and $tp(ij)$ stored in those tables TBL1 and TBL2 to the (Equation 1) and (Equation 5) to calculate a sum of counter values in the row directions of those tables. When the numerical calculations of each row are ended, the story analyzing unit 161 assigns the calculated values $Tt(ij)$ and $Ttp(ij)$ to the (Equation 2) and (Equation 6) to calculate $a(ij)$ and $b(ij)$. On the other hand, on the basis of the calculation results, a person matrix "A" and a location matrix "B" expressed by (Equation 3) and (Equation 7) are calculated, respectively. The story analyzing unit 161 then generates data corresponding to the calculated person matrix "A" and the location matrix "B" to end the story matrix generating process.

(3) Operation in Story Classification

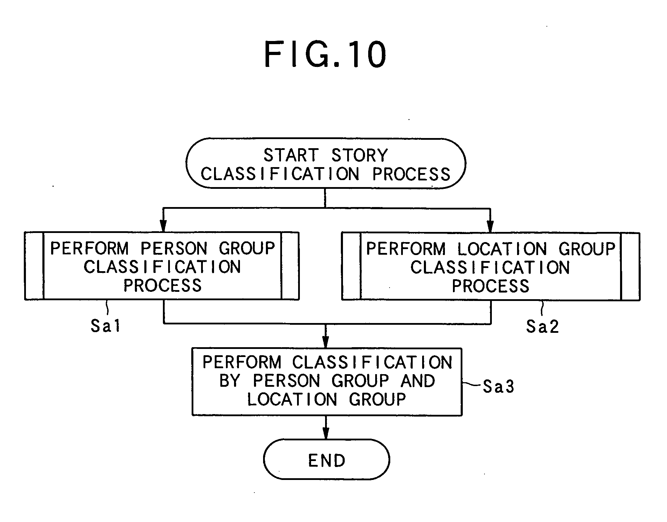

A story classification process executed in step S4 in FIG. 8 will be described below with reference to FIG. 10 to 12. FIG. 10 is a flow chart showing processes executed by the story analyzing unit 161 in step S4 in FIG. 8.

As shown in FIG. 10, in the processes, the story analyzing unit 161 first executes a person group classification process and a location group classification process described below (steps Sa1 and Sa2).

(i) About Person Group Classification Process (step Sa1)

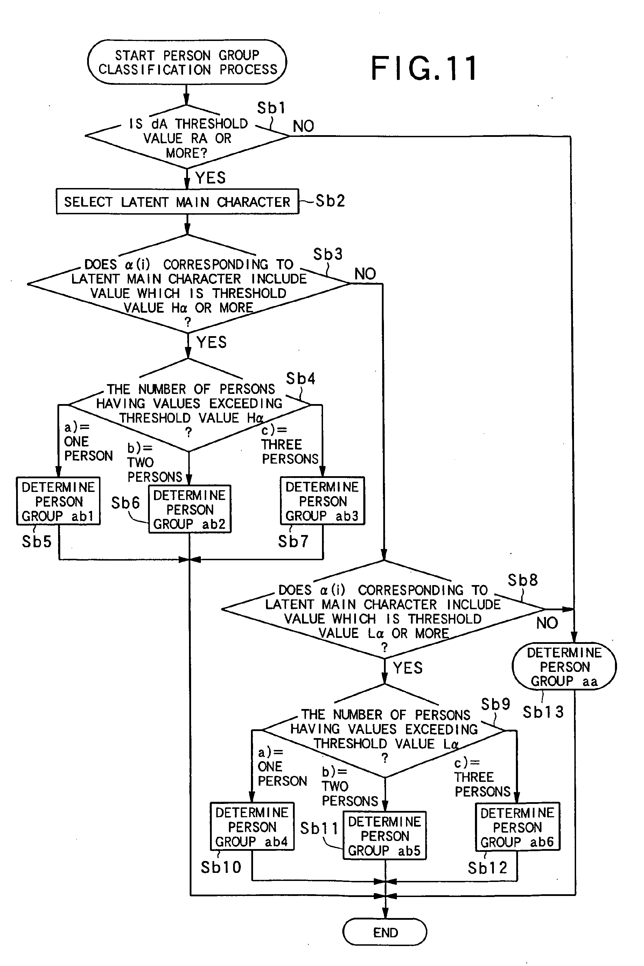

The process contents of the person group classification process are shown in FIG. 11. As shown in FIG. 11, in this process, the story analyzing unit 161 first decides whether the value dA calculated on the basis of (Equation 11) in step S3 in FIG. 8 is larger than a threshold value RA (step Sb1 in FIG. 11). As a result of determination, when "no" is determined in step Sb1, it is difficult to classify the person group of the contents data. For this reason, the story analyzing unit 161 determines the person group of the contents data as "person group aa" (step Sb13 in FIG. 11) to end the process.

On the other hand, when "yes" is determined in step Sb1 in FIG. 11, the story analyzing unit 161 selects a latent main character on the basis of values $\alpha(i)$ in the matrix U (step Sb2 in FIG. 11). More specifically, the story analyzing unit 161 extracts several persons corresponding to large values $\alpha(i)$ among the values $\alpha(i)$ in the matrix U to select the persons as latent main characters. For example, in the example in FIG. 6, three persons, that is, "person 1", "Person 2", and "person 3" have large values $\alpha(i)$. For this reason, the story analyzing unit 161 determines the three persons as latent main characters.

In this case, the number of persons selected as latent main characters is arbitrarily determined. For example, the number of persons to be selected may be determined in advance to sequentially select persons each having the large value $\alpha(i)$ or to select persons having values $\alpha(i)$ exceeding a predetermined value as latent main characters.

In this manner, upon completion of the selection of latent main characters, the story analyzing unit 161 extracts the largest values $\alpha(i)$ in the row corresponding to each latent main character, that is, the maximum values of the values $\alpha(i)$ in the row corresponding to each latent main character in the matrix U, and it is decided whether the values $\alpha(i)$ include a value $\alpha(i)$ larger than the threshold value H$\alpha$ (step Sb3 in FIG. 11). As a result of determination, when "yes" is determined in step Sb3, the story analyzing unit 161 determines the number of latent main characters having values larger than the threshold value H$\alpha$ (step Sb4 in FIG. 11), and the person group of the contents data is determined as follows:

    a) one latent main character has a value larger than the threshold value H$\alpha$: person group ab1;
    b) two latent main characters have values larger than the threshold value H$\alpha$: person group ab2; and
    c) three or more of latent main characters have values larger than the threshold value H$\alpha$: person group ab3

(steps Sb5 to step Sb7 in FIG. 11) to end the process.

In contrast to this, when "no" is determined in step Sb3 in FIG. 11, it is decided whether the largest values $\alpha(i)$ corresponding to each latent main character selected in step Sb2 in FIG. 11 include values $\alpha(i)$ larger than the threshold value L$\alpha$ (step Sb8 in FIG. 11). When "no" is determined in step Sb8, it is difficult to classify the person group of the contents data. For this reason, the story analyzing unit 161 classifies the person group of the contents data as "person group aa" (step Sb13 in FIG. 11) to end the process.

On the other hand, when "yes" is determined in step Sb8 in FIG. 11, the story analyzing unit 161 determines the number of persons having values exceeding the threshold value L$\alpha$ (step Sb9 in FIG. 11), and the person group of the contents data is determined as follows:

    a) one latent main character has a value larger than the threshold value L$\alpha$: person group ab4;
    b) two latent main characters have values larger than the threshold value L$\alpha$: person group ab5; and
    c) three or more of latent main characters have values larger than the threshold value L$\alpha$: person group ab6

(steps Sb10 to step Sb12 in FIG. 11) to end the process.

(ii) About Location Group Classification Process (step Sa2)

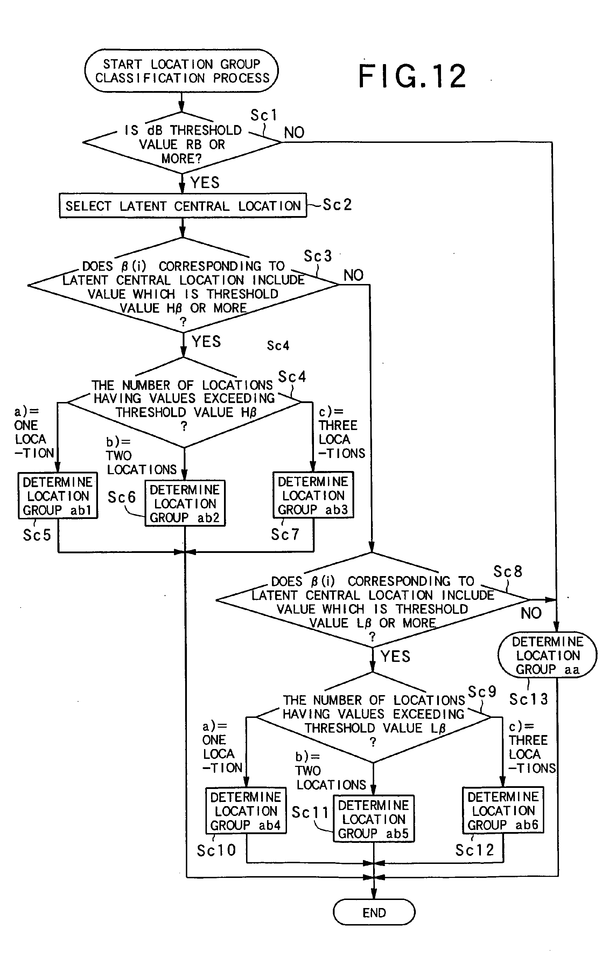

The process contents of the location group classification process are shown in FIG. 12. As shown in FIG. 12, in this process, the story analyzing unit 161 determines whether the value dB calculated on the basis of (Equation 12) in step S3 in FIG. 8 is larger than the threshold value RB (step Sc1 in FIG. 12). When "no" is determined in step Sc1, the story analyzing unit 161 determines the location group of the contents data as "location group aa" (step Sb13 in FIG. 12) to end the process.

On the other hand, when "yes" is determined in step Sc1 in FIG. 12, the story analyzing unit 161 selects a latent central location on the basis of values $\beta(i)$ in the matrix V (step Sc2 in FIG. 12). The selecting method used at this time is the same as in step Sb2 (FIG. 11) in the person group classification process.

In this manner, upon completion of the selection of latent central locations, the story analyzing unit 161 extracts the largest values $\beta(i)$ corresponding to the latent central locations selected in the step Sc2 in FIG. 12, and it is determined whether the values $\beta(i)$ include a value $\beta(i)$ larger than the threshold value H$\beta$ (step Sc3 in FIG. 12). When "yes" is determined in step Sc3, the story analyzing unit 161 determines the number of latent central locations having values larger than the threshold value H$\beta$ (step Sc4 in FIG. 12), and the location group of the contents data is determined as follows:

a) one latent central location has a value larger than the threshold value H$\beta$: location group ab1;
b) two latent central locations have values larger than the threshold value H$\beta$: location group ab2; and
c) three or more of latent central locations have values larger than the threshold value H$\beta$: location group ab3

(step Sc5 to step Sc7 in FIG. 12) to end the process.

In contrast to this, when "no" is determined in step Sc3 in FIG. 12, it is decided whether the largest values $\beta(i)$ corresponding to each latent central locations selected in step Sc2 in FIG. 12 include values $\beta(i)$ larger than the threshold value L$\beta$ (step Sc8 in FIG. 12). When "no" is determined in step Sc8, the story analyzing unit 161 determines the location group of the contents data as "location group aa" (step Sc13 in FIG. 12) to end the process.

On the other hand, when "yes" is determined in step Sc8 in FIG. 12, the story analyzing unit 161 determines the number of locations having values exceeding the threshold value L$\beta$ (step Sc9 in FIG. 12), and the location group of the contents data is determined as follows:

a) one latent central location has a value larger than the threshold value L$\beta$: location group ab4;
b) two latent central locations have values larger than the threshold value L$\beta$: location group ab5; and
c) three or more of latent central locations have values larger than the threshold value L$\beta$: location group ab6

(step Sc10 to step Sc12 in FIG. 12) to end the process.

When the person group and the location group corresponding to the contents data are determined by the person group classification process (step Sa1) and the location group classification process (step Sa2) as mentioned above, the story analyzing unit 161 determines a story classification of the contents data on the basis of these groups (step Sa3) to end the story classification process.

In this case, the story analyzing unit 161 extracts category information included in the additional information of the contents data to determine a story classification table TBL3-k to be used on the basis of the category information. The story analyzing unit 161 selects a story classification corresponding to the combination of the person group and the location group of the contents data in the story classification table TBL3-k.

(4) Operation in Reproduction of Contents Data

An operation of reproducing contents data stored in the HD 121 in the image processing apparatus 1 according to the embodiment will be described below.

When the contents data in the image processing apparatus 1 is to be reproduced, a user need to perform an input operation to reproduce the contents data by operating the user I/F unit 13. In this manner, when the user operates the user I/F unit 13, the recording/reproducing unit 162 outputs a control signal to the HDD 12 in accordance with an input signal transmitted from the user I/F unit 13. As a result, a story classification and a category name recorded on the HD 121 in association with each contents data are read in the HDD 12, and transmitted to the system control unit 16.

On the other hand, when the story classification and the category name are transmitted from the HDD 12, the recording/reproducing unit 162 generates image data corresponding to a) category selection screen and b) contents selection screen on the basis of these pieces of information.

These screens will be described below.

a) Category Selection Screen

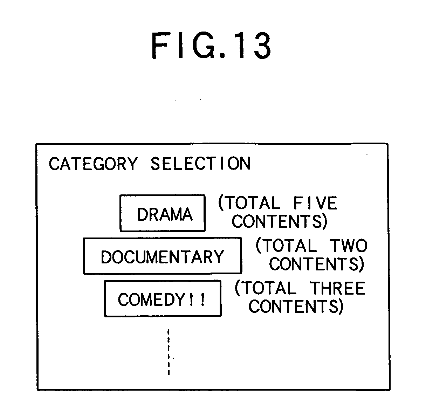

The category selection screen is a screen to cause a user to select a category serving as a reproduction candidate when the reproduction candidate is selected from the contents data recorded on the HD 121. On the category selection screen, category names corresponding to all the contents data recorded on the HD 121 are displayed as buttons as shown in FIG. 13.

A button corresponding to each category item is associated with anchor. When a user performs an input operation to select any one of these buttons on the user I/F unit 13, a contents selection screen associated with the button is displayed.

A format to generate the category selection screen is arbitrarily determined, however, in the embodiment, to perform a concrete explanation, it is assumed that the category selection screen is generated in HTML (Hyper Text Markup Language) format.

b) Contents Selection Screen

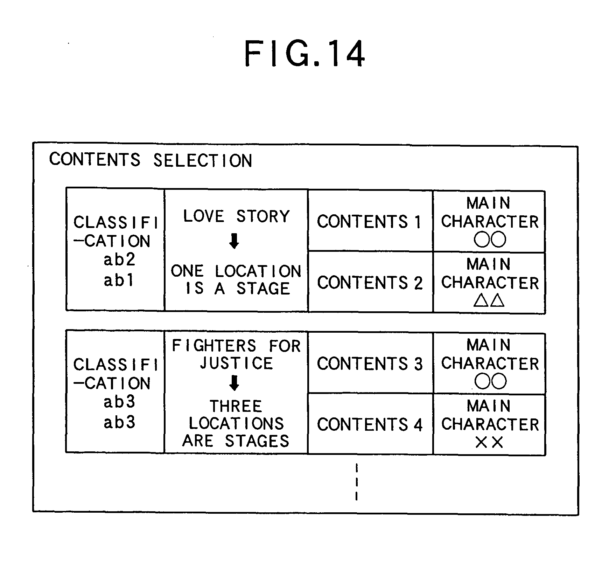

The contents selection screen is a screen arranged for each category, and is associated with each button of the category selection screen. An example of the category selection screen is shown in FIG. 14. As shown in FIG. 14, on the contents selection screen, comments meaning story classifications, contents name, and the like are displayed for each of story classifications.

When image data corresponding to each contents selection screen is generated, the recording/reproducing unit 162 generates the image data corresponding to the screen in accordance with the story classification and the category corresponding to each contents data.

In this case, as shown in FIG. 14, information such as the name, age, and the like of a latent main character and a location name and the like serving as a latent central location may be displayed as shown in FIG. 14. In this case, in the story classification process, the person name, age, and the like of the latent main character may be extracted from the person information, and recorded on the HD 121 in association with the contents data.

On the contents selection screen, when a user performs an input to the user I/F unit 13 to select contents data to be reproduced, the recording/reproducing unit 162 outputs control signals to the HDD 12 and the image display unit 14. The HDD 12 then reads the contents data from the HD 121 to supply the contents data to the image display unit 14, and the image display unit 14 sequentially decodes the contents data supplied from the HDD 12 to supply the decoded data to the monitor 2 . As a result, an image corresponding to the contents data is displayed on the monitor 2.

In this manner, the image processing apparatus 1 according to the embodiment acquires contents data including person information representing an attribute corresponding to a person appearing in the contents with plot, location information representing an attribute corresponding to a location appearing as a stage in the contents, and additional information representing at least one thereof. The image processing apparatus 1 calculates a story matrix representing the probability of appearance of at least one of the appearing character and the appearing location at an arbitrary point of time in the story line of the contents on the basis of the additional information to classify the contents data on the basis of the story matrix.

With this configuration, story matrix data objectively representing the contents of each contents data is generated to make it possible to perform objective data classification based on the story matrix.

In addition, the image processing apparatus 1 according to the embodiment, in determination of a data classification, a latent main character in the contents is determined on the basis of the story matrix, and the contents data is classified on the basis of the determination result.

With this configuration, a main character in the story corresponding to each contents data can be recognized. For this reason, more accurate story classification can be realized.

The image processing apparatus 1 according to the embodiment determines a latent central location serving as a main stage in the contents on the basis of a story matrix in determination of a data classification, and classifies the contents data on the basis of the determination result.

With this configuration, a location serving as a main stage in the story corresponding to each contents data can be recognized. For this reason, more accurate story classification can be realized.

The image processing apparatus 1 according to the embodiment displays a classification result of contents data on the monitor 2. For this reason, the classification result can be shown to a user.

Furthermore, the image processing apparatus 1 according to the embodiment records a data classification corresponding to the classification result of the contents data on the HD 121 in association with the contents data. For this reason, in retrieval of contents data recorded on the HD 121, the data classification can be used, and therefore, novel data retrieval based on an objective reference can be performed.

In the image processing apparatus 1 according to the embodiment, a data classification recorded on the HD 121 is displayed on the monitor 2. As a result of the display, contents data recorded on the HD 121 in association with the data classification designated by a user is processed. For this reason, data corresponding to the retrieval result can be reliably processed.

The image processing apparatus 1 in the embodiment records contents data received through the TV receiving unit 11 on the HDD 12, however, a device for Internet connection may be arranged instead of the TV receiving unit 11, to download the contents data from the internet through the device.

Additional information for each frame is added to the contents data recorded on the HDD 12 in the embodiment. However, when characters, locations, and the like in a plurality of continuous frames do not change, the additional information can be added for every frames, shots, or scenes. However, when the configuration is employed, for example, information such as "no change from frame f1 to frame f30" need to be added to the additional information. In the story matrix generating process (step S2 in FIG. 8), it is enough that the story analyzing unit 161 increments the same counters at t(ij) in the frames f1 to f30.

Furthermore, the image processing apparatus 1 in the embodiment has a story classification table TBL3-k for each category of the contents data. However, when it is enough that the accuracy of the story classification is low, the image processing apparatus 1 may have only one story classification table TBL3-k. When accurate story classification is required, the story classification tables TBL3-k may be arranged not only for categories but also for sexes, ages, and the like of latent main characters.

Still furthermore, the story classification table TBL3-k may be properly changed. In this case, the story classification table TBL3-k may be downloaded from the internet and stored in the table recording unit 15, or may also be installed from an optical disk or the like.

The image processing apparatus 1 in the embodiment determines a story classification of the contents data every time recording of contents data is performed, however, a determination timing of the story classification is not limited to the above timing, and the story classification may be determined in reproduction of the contents data.

Still furthermore, in the embodiment, the threshold values RA, H$\alpha$, and L$\alpha$ and the threshold values RB, H$\beta$, and L$\beta$ are set at predetermined values, however, the threshold values may be recorded on a nonvolatile memory, an optical disk, or the like and properly changed depending on the taste of a user. In this case, the threshold values may be downloaded through a network such as the Internet.

Furthermore, in the embodiment, the operation of the process which determines a story classification corresponding to the contents data is executed by the story analyzing unit 161, however, the image processing apparatus 1 may includes a recording medium on which a program which regulates the operation of the recording process is recorded, and a computer which reads the recording medium, and the operation of the same recording process as described above may be performed by reading the program with the computer.

Still furthermore, the image processing apparatus 1 in the embodiment determines a story classification after the story matrix is converted by the (Equation 9) and (Equation 10), however, a data classification may be determined without converting the story matrix.

[2] Application

[2.1]Application 1

An image processing apparatus 1 according to Application 1 is realized by the same configuration as that shown in FIG. 1. Therefore, unless otherwise stated, the constituent elements in FIG. 1 have the same configuration as that in the first embodiment, and performs the same operation as that in the first embodiment.

The image processing apparatus 1 according to the above embodiment determines story classification corresponding to each contents data. Further, when a user selects contents data serving as a reproduction candidate, the image processing apparatus 1 makes it easy to retrieve each contents data by using the story classification. In contrast to this, in the image processing apparatus 1 according to Application 1, the recording/reproducing unit 162 automatically erases the contents data on the basis of the story classification when a free space on the HD 121 is smaller than a predetermined threshold value. The threshold value may be arbitrarily determined.

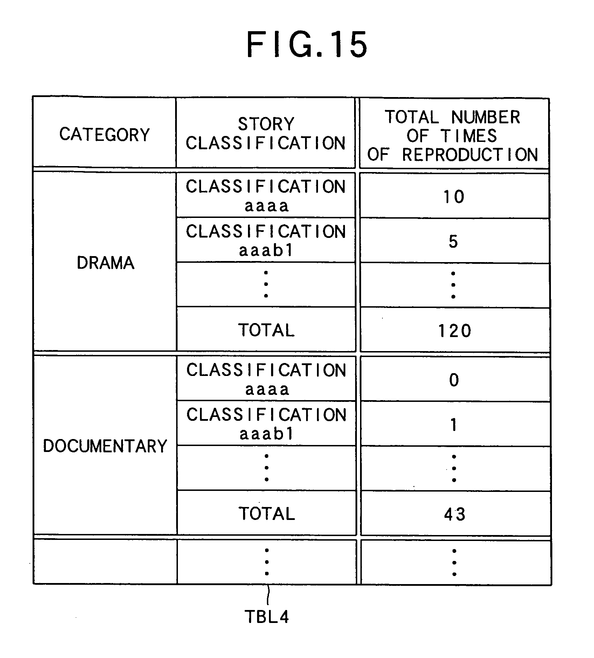

In order to realize the function, in the table recording unit 15 of the image processing apparatus 1 according to the application, a reproduction history table TBL4 shown in FIG. 15 is stored. As shown in FIG. 15, a counter to count the number of times of reproduction of the contents data belonging to the story classification in association with the story classification corresponding to each category is arranged in the reproduction historytable TBL4. In the reproduction history table TBL4, a counter to count a sum of the numbers of times of reproduction in the categories is also stored for each category.

The reproduction history table TBL4 is updated by the recording/reproducing unit 162 every time reproduction of the contents data is performed. In this case, the recording/reproducing unit 162 reads a category name and a story classification recorded on the HD 121 in association with the contents data to increment a counter in a field corresponding to the classification. As a result of the updating, the total number of times of reproduction of the contents data belonging to each story classification, and a sum of the numbers of times of reproduction are stored in the reproduction history table TBL4.

Each counter stored in the reproduction history table TBL4 may be cleared at arbitrary timings. However, since the counter values are necessary to recognize the taste of a user, it is assumed in Application 1 that reproduction histories are continuously accumulated without be cleared.

The recording/reproducing unit 162 in Application 1 selects an object to be erased from contents data belonging to a category having the lowest value of the sum of the numbers of times of reproduction corresponding to each category stored in the reproduction history table TBL4. In the selection, the recording/reproducing unit 162 determines a story classification having the largest total number of times of reproduction in the story classifications corresponding to the category of the reproduction history table TBL4, and selects contents data belonging to a story classification having contents minimally related to the contents of the story classification as an object to be erased.

In this case, the recording/reproducing unit 162 selects the story classification having contents minimally related to the story classification having the largest total number of times of reproduction as follows.

Firstly, in the story classification table TBL3-k described above, story classifications corresponding to each person group and each location group are stored. These groups are determined as follows.

　　　a) Person Group
　　　　the number of latent main characters, and the probabilities of appearance of the main characters in each frame
　　　b) Location Group
　　　　the number of latent central locations, and the probabilities of appearance of the locations in each frame

This means the following relationships.

　　　(i) It is considered that the story contents of a person group having the large number of latent main characters are lightly related to those of a person group having the small number of latent main characters. For this reason, when the difference between the numbers of latent main characters is small, the person groups are deeply related to each other, and when the difference is large, the person groups are lightly related to each other.
　　　(ii) The story contents of a person group having a high probability of appearance of a latent main character is lightly related to the story contents of a person group having a low probability of appearance of a latent main character.
　　　(iii) It is considered that the story contents of a location group having the large number of locations serving as latent central locations are lightly related to the story contents of a location group having the small number of locations serving as latent central locations. For this reason, when the difference between the numbers of latent central locations is small, the contents of the groups are deeply related, and when the difference between the numbers of latent central locations is large, the contents of the groups are lightly related.
　　　(iv) The story contents of a location group having a high probability of appearance of a location serving as a latent central location are lightly related to the story contents of a location group having a low probability of appearance of a location serving as a latent central location.

Therefore, in the story classification table TBL3-k, it is considered that when a field position in the lateral direction and a field position in the longitudinal direction are separated from each other, the relativity in contents of story between the field positions is light. This can be expressed by the following equation:

[Equation 13]

$$e_{ij} = \sqrt{(p\text{-}i)^2 + (q\text{-}j)^2}$$

where p and q represent field positions having the largest total number of times of reproduction in the story classification table TBL3-k, and i and j represent the arbitrary field positions. More specifically, "(p-i)" in (Equation 13) means the number of fields in the lateral direction from a field corresponding to a story classification having the largest total number of times of reproduction in the story classification table TBL3-k. For example, when the story classification having the largest total number of times of reproduction in the example shown in FIG. 7 is "classification ab1ab1", "(p-i)" = 1 is given to a story classification belonging to "location group ab2", and "(p-i)" = 2 is given to a story classification belonging to "location group ab3".

"(q-j)" in (Equation 13) means the number of fields in the longitudinal direction from a field corresponding to a story classification having the largest total number of times of reproduction in the story classification table TBL3-k. For example, in the example shown in FIG. 7, when a story classification having the largest total number of times of reproduction is "classification ab1ab1", "(q-j)" = 1 is given to a story classification belonging to "person group ab2", and "(q-j)" = 2 is given to a story classification belonging to "person group ab3".

In Application 1, the recording/reproducing unit 162 uses the relationship to determine a story classification to be erased, that is, a classification having the largest value eij, and the selects contents data belonging to the story classification as an object to be erased.

Next, an operation performed when contents data is recorded in the image processing apparatus 1 according to Application 1 for realizing the function will be described below.

When a user operates the user I/F unit 13 to turn on the power supply of the image processing apparatus 1, contents data received by the TV receiving unit 11 is decoded by the image display unit 14 to supply the decoded data to the monitor 2 as an image signal or the like. As a result, an image corresponding to on-air contents is displayed on the monitor 2.

In this state, when the user performs recording reservation of the contents data, the recording/reproducing unit 162 records the contents data on the HDD 12 at the time of the reservation. The operation performed at this time is the same as that in the "embodiment" described above.

In this manner, when the contents data is recorded on the HDD 12, the story analyzing unit 161 executes the processes shown in FIG. 8 to determine a story classification corresponding to the contents data. Since the operation performed at this time is the same as that described above, a detailed description thereof will be omitted.

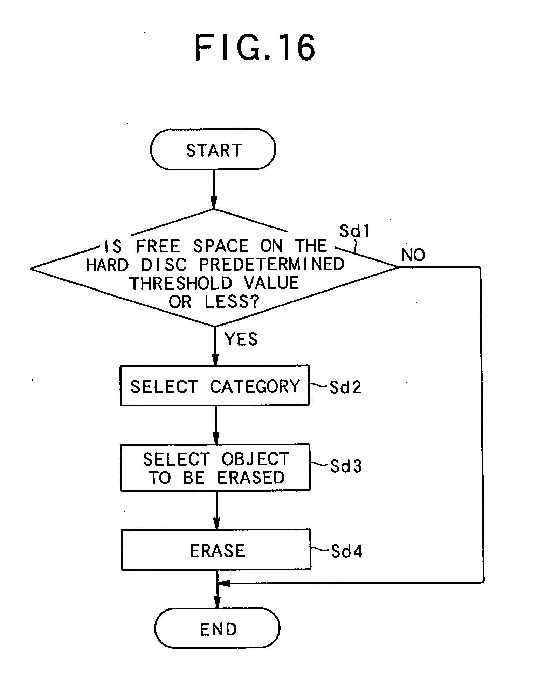

The recording/reproducing unit 162 executes a contents data erasing process shown in FIG. 16.

In this process, the recording/reproducing unit 162 retrieves a free space of the storage space on the HD 121 to decide whether the free space is smaller than a predetermined threshold value (step Sd1). As a result of the above determination, when it is determined that the free space is not smaller than the threshold value ("no"), the recording/reproducing unit 162 ends the process.

On the other hand, when "yes" is determined in step Sd1, the recording/reproducing unit 162 retrieves the reproduction history table TBL4 to select a category having the smallest sum of the total number of times of reproduction (step Sd2). The recording/reproducing unit 162 selects a story classification having the largest total number of times of reproduction in the category, and selects contents data belonging to a story classification in which a field position in the lateral direction and a field position in the longitudinal direction in the story classification table TBL3-k which corresponds to the category are maximally separated from each other in accordance with (Equation 13) (step Sd3). At this time, in any one of the following cases:

  a) when there are a plurality of story classifications having the same calculation results of (Equation 13) each, and
  b) when there are a plurality of contents data belonging to a selected story classification,

   in the contents data belonging to the selected story classification, contents data having the oldest recording time is selected as an object to be erased.

When the contents data to be erased is selected with the above process, the recording/reproducing unit 162 outputs a control signal to the HDD 12 (step Sd4) to end the process. As a result, the selected contents data is erased from the HD 121 in the HDD 12.

In this manner, in the image processing apparatus 1 according to Application 1, on the basis of a data classification, contents data to be erased is selected from the contents data recorded on the HD 121, and the selected contents data is erased from the HD 121.

With the configuration, since contents data which is not matched with the taste of a user is automatically determined as an object to be erased, the contents data can be automatically erased while reflecting the intention of the user.

In the image processing apparatus 1 according to Application 1, a configuration is employed such that the contents which are not matched with the taste of the user are determined on the basis of both the data classification information and the reproduction history of contents data, and contents data to be erased is selected on the basis of the determination result. For this reason, an object to be erased can be determined while more reflecting the taste of the user.

[2.2] Application 2

An image processing apparatus 1 according to Application 2 is realized by the same configuration as that shown in FIG. 1. Therefore, unless otherwise stated, each constituent element in FIG. 1 has a configuration and performs an operation similar to those in the first embodiment.

Inthiscase, inApplication2, story matrixes corresponding to each contents data are used to compare the stories of each contents data.

The story analyzing unit 161 in Application 2 calculates matrixes U and V with respect to two contents data the stories of which are compared with each other on the basis of the (Equation 1) to (Equation 10), and performs a story comparing process on the basis of the matrixes U and V corresponding to those contents data. The story comparing process will be described below.

[Story Comparing Process]

The story analyzing unit 161 assigns a calculation result of (Equation 9) and (Equation 10) to (Equation 14) and (Equation 15) to calculate a root mean square of the matrix U and V respectively.

[Equation 14]

$$cA = \sqrt{\sum_{i=1}^{n} \{\alpha 1(i) - \alpha 2(i)\}^2 / n}$$

[Equation 15]

$$cB = \sqrt{\sum_{i=1}^{m} \{\beta 1(i) - \beta 2(i)\}^2 / m}$$

In this equation, "$\alpha 1(i)$" and "$\alpha 2(i)$" denote parameters corresponding to the matrixes U of each contents data to be compared, and "$\beta 1(i)$" and "$\beta 2(i)$" denote parameters corresponding to the matrixes V of each contents data to be compared.

In this case, as expressed in (Equation 14), a value cA is determined by a difference between the probabilities of appearance of a latent main character and other characters in the same frame in both the contents data to be compared with each other. For this reason, when the parameters of the matrixes U corresponding to both the contents data are close to each other, the cA value becomes small. Therefore, when the value becomes small, the matrixes U corresponding to both the contents data indicate similarity. In both the contents data, it is supposed that the latent main character and the other characters have close human relationship.

A value cB is determined like the value cA value. When the value cB becomes small, it is supposed that the positions of the latent central locations in the stories of both the contents data are similar to each other.

The story analyzing unit 161 compares the values cA and cB with predetermined threshold values to decide whether the human relationships in the stories corresponding to both the contents data and the positions of the latent central locations in the stories are similar. On the basis of the determination result, the stories of both the contents data are compared with each other. The threshold values are arbitrarily determined.

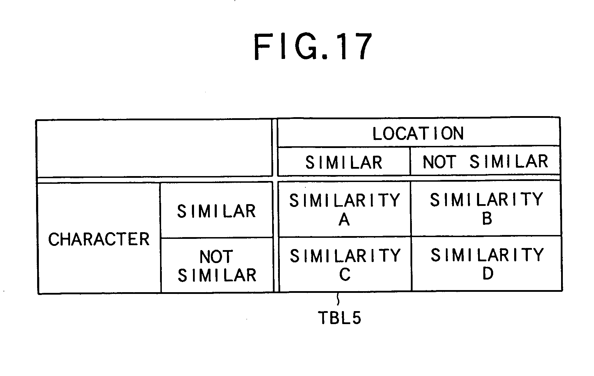

In order to make it possible to perform such determination, in the modification, a story comparing table TBL5 shown in FIG. 17 is stored in the table recording unit 15. On the basis of the story comparing table TBL5, the story analyzing unit 161 determines the similarity of stories of both the contents data to be compared with each other. In the case shown in FIG. 17, similarities between the stories of both the contents are given in an order: "similarity A" > "similarity B" > "similarity C" > "similarity D".

An operation performed when stories are compared with each other in the image processing apparatus 1 according to the application will be described below in detail.

When a user operates the user I/F unit 13 to turn on the power supply of the image processing apparatus 1, and performs an input operation to the user I/F unit 13 to compare the stories of contents data, an input signal corresponding to the input operation is transmitted to the system control unit 16. In accordance with the input signal, the story analyzing unit 161 generates image data corresponding to a selection screen to select contents data the stories of which are compared with each other to output the image data to the image display unit 14. As a result, a selection screen corresponding to the image data is displayed on the monitor 2. The selection screen may have any configuration.

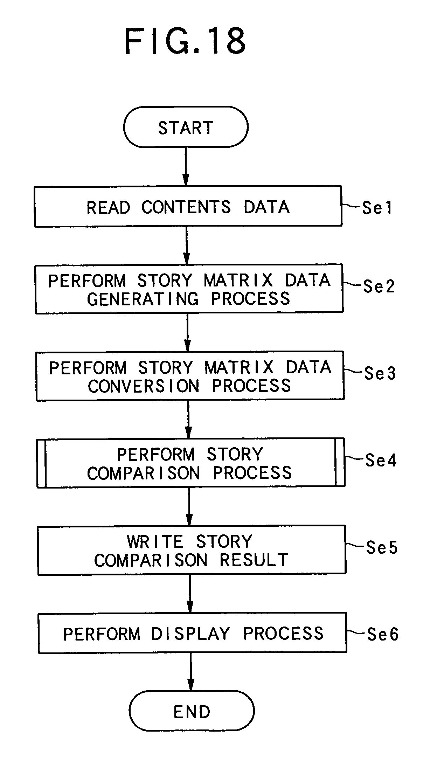

Next, when the user performs an input operation to the user I/F unit 13 to select two contents data of the stories which are compared with each other in accordance with the display of the selection screen, an input signal corresponding to the input operation is output to the system control unit 16. The story analyzing unit 161 executes the processes shown in FIG. 18 in accordance with the input signal.

In the processes, the story analyzing unit 161 reads two contents data selected as objects of the stories which are compared with each other (step Se1), and generates story matrix data corresponding to both the contents data (step Se2). The story analyzing unit 161 converts the calculated story matrix data into data corresponding to the matrixes U and V (step Se3). Since the processes performed at this time are the same as those in steps S1 to S3 in FIG. 8, a detailed description thereof will be omitted.

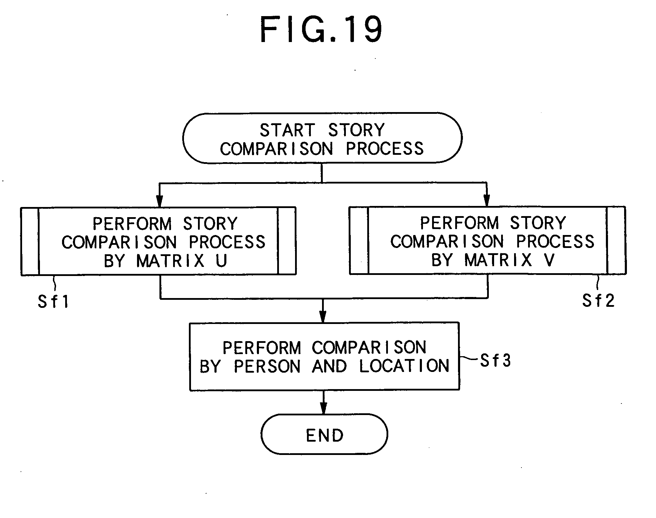

The story analyzing unit 161 then executes a story comparing process shown in FIG. 19 to the matrixes U and V obtained by converting the story matrixes in step Se3 (step Se4). In the processes, the story analyzing unit 161 executes a story comparing process by the matrix U (step Sf1 in FIG. 19) and a story comparing process by the matrix V (Sf2 in FIG. 19). As a result, it is determined whether the human relationships in the stories corresponding to both the contents data are similar to each other, and whether the positions of the latent central locations in the stores are similar to each other. The details of these processes will be described later.

In this manner, as results obtained in steps Sf1 and Sf2 in FIG. 19, the similarity between the human relationships of both the contents data and the similarity between the positionings of the latent central locations are determined. In this case, the story analyzing unit 161 retrieves the story comparing table TBL5 on the basis of the determination results. At this time, for example, when the human relationships in the stories corresponding to both the contents data are similar, and the positionings of the central locations are similar, the story analyzing unit 161 then determines the relationship between both the contents data as "similarity A". In contrast to this, as the results in steps Sf1 and Sf2, when the human relationships in the stories corresponding to both the contents data are not similar, and the positionings of the latent central locations are not similar to each other, the story analyzing unit 161 then determines the relationship between both the contents data as "similarity D".

Upon completion of the story comparing process described above, the story analyzing unit 161 outputs a control signal added with information such as "similarity A" or the like determined in step Se4 to the HDD 12 (step Se5). As a result, information such as "similarity A" is recorded on the HD 121 in association with the contents data to be compared with each other.

The story analyzing unit 161 performs a display process of a story comparing result (step Se6) to end the process. More specifically, for example, the story analyzing unit 161 generates an image data including a character string such as "As a result of story comparison, it is considered that both the contents are very similar to each other." to supply the image data to the image display unit 14. As a result, an image corresponding to the image data is displayed on the monitor 2.

Thereafter, when the user performs an input operation to the user I/F unit 13 to reproduce contents data, in accordance with the input operation, the recording/reproducing unit 162 retrieves a story comparing result recorded in association with the contents data to display titles or the like of similar contents data on the monitor 2 together with a character string such as "Some contents are similar to the selected contents. Is the contents data an object to be reproduced?" And when a user performs an input operation to the user I/F unit 13 to select a title, the recording/reproducing unit 162 executes a reproducing process of the contents data in accordance with the input operation.

In this manner, according to the image processing apparatus of the application, a comparison result of the stories between the contents data is recorded in association with the contents data. For this reason, the contents data selected by a user and contents data of the story which is similar to that of the selected contents data can be shown to the user. As a result, inconvenient retrieval of contents data can be resolved.

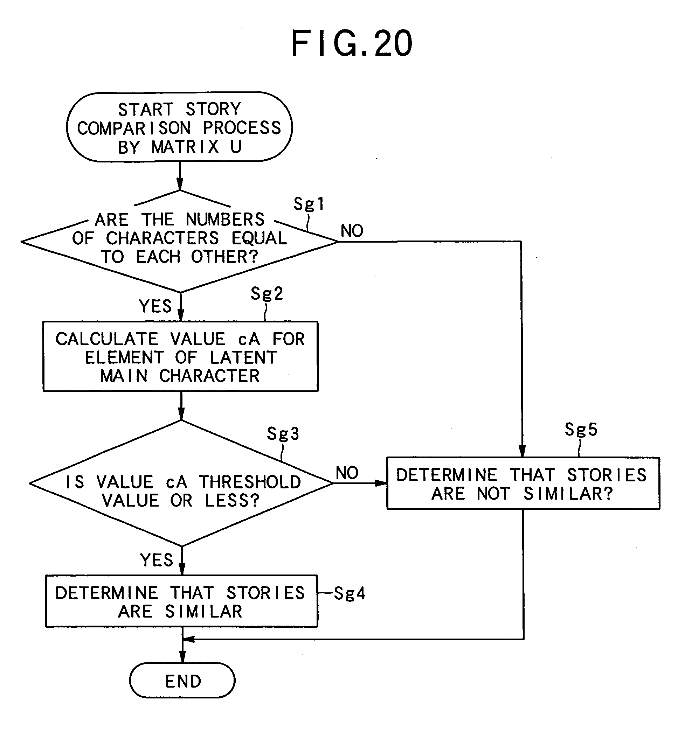

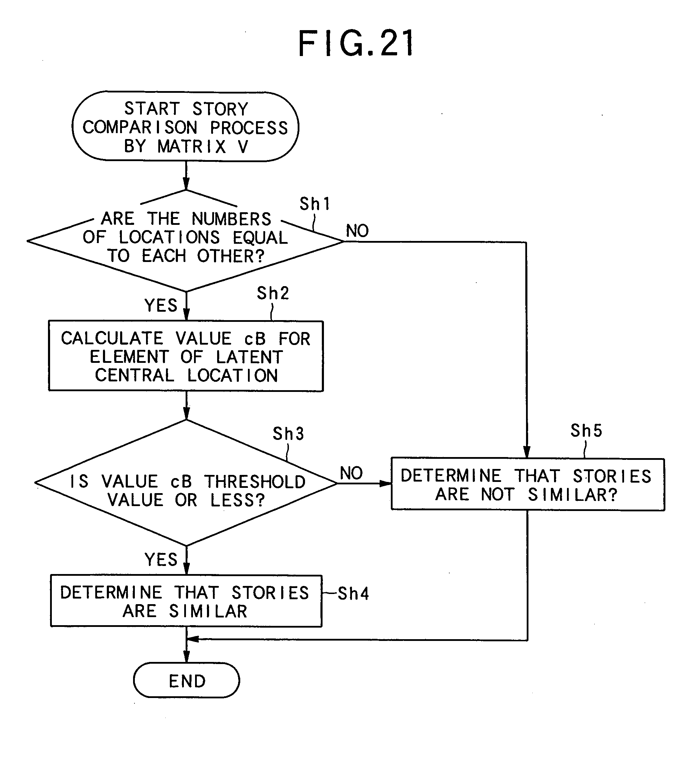

After the story comparing process executed by the matrix U in step Sf1 in FIG. 19 is described with reference to FIG. 20, a story comparing process executed by the matrix V in step Sf2 will be described below with reference to FIG. 21.

In the story comparing process by the matrix U, the story analyzing unit 161 decides whether the numbers of characters of both the contents data are equal to each other on the basis of the numbers of parameters included in the matrix U corresponding to both the contents data (step Sg1). When "no" is determined in step Sg1, the story analyzing unit 161 determines that the human relationships in the stories of both the contents data are not similar to each other (step Sg5) to end the process.

On the other hand, when "yes" is determined in step Sg1, the story analyzing unit 161 calculates a value cA in accordance with the (Equation 14) (step Sg2), and decides whether the calculated value cA is a predetermined threshold value or less (step Sg3). When "no" is determined in step Sg3, the story analyzing unit 161 determines that the human relationships in the stories of both the contents data are not similar to each other (step Sg5) to end the process.

In contrast to this, when "yes is determined in step Sg3, the story analyzing unit 161 determines that the human relationships in the stories of both the contents data are similar to each other (step Sg4) to end the process.

In the story comparing process by the matrix V, the story analyzing unit 161 determines whether the numbers of appearing locations of both the contents data are equal to each other on the basis of the numbers of parameters included in the matrix V corresponding to both the contents data (step Sh1). When "no" is determined in step Sh1, the story analyzing unit 161 determines that the positionings of the central locations in the stories of both the contents data are not similar to each other (step Sh5) to end the process.

On the other hand, when "yes" is determined in step Sh1, the story analyzing unit 161 calculates a value cB in accordance with the (Equation 15) (step Sh2), and decides whether the calculated value cB is a predetermined threshold value or less (step Sh3). When "no" is determined in step Sh3, the story analyzing unit 161 determines that the positionings of the central locations of both the contents data are not similar to each other (step Sh5). When "yes" is determined in step Sh3, the story analyzing unit 161 determines that the positionings of the central locations of both the contents data are similar to each other (step Sh4) to end the process.

In this manner, according to Application 2, a difference between the probabilities of appearance between both the contents data is calculated on the basis of the story matrix data, and the similarity between the contents of both the contents data is determined on the basis of the difference to compare the contents data. For this reason, a comparing operation of story contents, which had to be manually performed in a conventional technique, can be performed on the basis of objective indexes. At this time, since a comparison result is stored in the HD 121 in association with the contents data, it can be used as objective indexes to retrieve each contents data.

In the application, the process used in story comparison corresponding to the contents data is executed by the story analyzing unit 161. The image processing apparatus may include a recording medium on which a program which regulates the operation of the recording process is recorded, and a computer which reads the program, so that the operation of the same recording process as described above may be performed by reading the program by the computer.

[2.3] Application 3

In the application, story matrix data corresponding to each content data is applied to form the summary of the story of each contents data. An image processing apparatus according to the application is realized by the same configuration as that shown in FIG. 1. Therefore, unless otherwise stated, each constituent element in FIG. 1 has a configuration and performs an operation similar to that in the first embodiment.

This application is different from the embodiment described above in only processes executed by the story analyzing unit 161. A concrete operation performed when the story analyzing unit 161 according to the application generates data corresponding to the summary of a story (to be referred to as "summary data" hereinafter) will be described below in detail.

When a user operates the user I/F unit 13 to turn on the power supply of the image processing apparatus 1, and performs an input operation to the user I/F unit 13 to form a summary, an input signal corresponding to the input operation is transmitted to the system control unit 16. In accordance with the input signal, the story analyzing unit 161 generates image data corresponding to a selection screen to select contents data to be summarized to output the image data to the image display unit 14. As a result, a selection screen corresponding to the image data is displayed on the monitor 2. The selection screen may have any configuration.

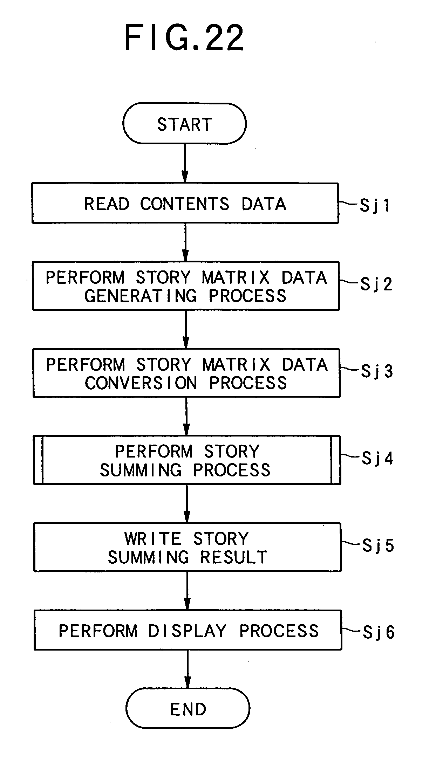

When the user performs an input operation to the user I/F unit 13 to select contents data to be summarized in accordance with the display of the selection screen, an input signal corresponding to the input operation is output to the system control unit 16. The story analyzing unit 161 executes the processes shown in FIG. 22 in accordance with the input signal to generate summary data of a story corresponding to each content data.

In the processes, the story analyzing unit 161 reads contents data corresponding to the input signal (step Si1), and calculates a story matrix corresponding to the contents data in accordance with (Equation 1) to (Equation 8). The story analyzing unit 161 generates the story matrix data corresponding to the calculation result (step Si2), and converts the story matrix data into data corresponding to matrixes U and V in accordance with (Equation 9) and (Equation 10) (step Si3). Since the processes performed at this time are the same as those in steps S1 to S3 in FIG. 8, a detailed description thereof will be omitted.

Next, the story analyzing unit 161 executes a story summarizing process (step Si4). In the processes, the story analyzing unit 161 determines a latent main character and a latent central location on the basis of the data corresponding to the matrixes U and V obtained in step Si3. At this time, the story analyzing unit 161 extracts several persons corresponding to large values $\alpha(i)$ and $\beta(i)$ as in step Sb2 in FIG. 11 and step Sc2 in FIG. 12 to select the persons as latent main characters.

In this manner, when the latent main character and the latent central location are determined, the story analyzing unit 161 selects a frame in which both the latent main character and the latent central location simultaneously appear in the contents data. At this time, the story analyzing unit 161 retrieves additional information included in all the frames corresponding to the contents data to select frames in which the latent main character or the like appears. The story analyzing unit 161 extracts data corresponding to the selected frame from the contents data, and re-arranges the data in a time-series manner to generate summary data corresponding to the contents data.

As a result of the above process, upon completion of the story summing process in step Si4, the story analyzing unit 161 outputs a control signal added with the summary data generated in step Si4 to the HDD 12 (step Si5). As a result, the summary data is recorded on the HD 121 in association with the contents data to be summarized.

Next, the story analyzing unit 161 performs a display process of the summary data (step Si6) to end the process. More specifically, the control signal added with the summary data is transmitted from the story analyzing unit 161 to the image display unit 14. As a result, the image display unit 14 outputs an image signal or the like corresponding to the summary data to the monitor 2.

Thereafter, when the user performs an input operation to the user I/F unit 13 to reproduce the contents data, in accordance with the input operation, the recording/reproducing unit 162 continuously reproduces the summary data recorded on the HD 121 in association with the contents data. The user can select contents data desired to be reproduced by the user herself/himself with reference to the continuously reproduced summary data.

In this manner, according to the application, contents data including person information representing an attribute of a person appearing in contents with plot, location information representing an attribute of a location appearing as a stage in the contents, and additional information representing at least one of them are acquired, and a story matrix representing the probability of appearance of at least one of the character and the appearing location in an arbitrary frame in the story line of the contents is calculated on the basis of the additional information. At least one of the latent main character and the latent central location in the contents is determined on the basis of the story matrix, and parts in which the latent main character or the latent central location in the contents appears are connected in a time-series manner to generate a summary data corresponding to the summary of the contents data. For this reason, since the summary of contents, which had to be manually formed in a conventional technique, is automatically formed, a summary based on an objective index which cannot be formed in a conventional technique can be formed. In addition, on the basis of the summary, contents data can be retrieved.

In the application, a process performed when summary data corresponding to contents data is formed is executed by the story analyzing unit 161, however, the image processing apparatus may include a recording medium on which a program which regulates the operation of the recording process is recorded, and a computer which reads the program, so that the operation of the same recording process as described above may be performed by reading the program by the computer.

The invention may be embodied in other specific forms without departing from the spirit thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

**Claims**

1. A data classification method, **characterized in that** it comprises:

    a first process which acquires contents data including an attribute corresponding to a character appearing in contents with plot, an attribute corresponding to a set location appearing as a stage in the contents, and additional information representing at least one of the attributes;
    a second process which calculates the appearing probability of appearance of at least one of the character and the set location at an arbitrary point of time in a story line of the contents on the basis of the additional information; and
    a third process which classifies the contents data on the basis of the appearing probability.

2. The data classificationmethod according to claim 1, wherein in the third process,
    on the basis of the appearing probability, the character serving as a main character in the contents is determined, and the contents data is classified on the basis of the determination result.

3. The data classification method according to any one of claim 1, wherein
    in the third process,
    on the basis of the appearing probability, the set location serving as a main stage in the contents is determined, and the contents data is classified on the basis of the determination result.

4. The data classificationmethod according to claim 1, further comprising
    a fourth process which is performed after the third process, and which displays a classification result of the contents data in the third process on a display device.

5. The data classificationmethod according to claim 1, further comprising
    fifth and sixth processes which are performed after the third process, said fifth process generating classification information corresponding to the classification result of the contents data in the third process, and said sixth process recording the classification information on a recording medium in association with the contents data.

**6.** The data classificationmethod according to claim 5, further comprising

seventh and eighth processes which are performed after the sixth process, and said seventh process displaying the classification information recorded on the recording medium on a display device, and said eighth process processing the contents data recorded on the recording medium in association with the classification information designated by a user when the classification information is displayed in the seventh process.

**7.** The data classification method according to claim 5, further comprising

ninth and tenth processes which are performed after the sixth process, said ninth process selecting the contents data to be erased from the contents data recorded on the recording medium on the basis of the classification information, and said tenth process erasing the contents data selected in the seventh process from the recording medium.

**8.** The data classification method according to claim 7, wherein in the ninth process,

the contents which are not matched with the taste of a user are determined on the basis of both the classification information, and a reproduction history of the contents data to select the contents data to be erased on the basis of the determination result.

**9.** The data classificationmethod according to claim 1, further comprising

eleventh and twelfth processes which are performed after the second process, said eleventh process calculating a difference between the appearance probability of the contents data and the appearance probability of the other contents data on the basis of the appearance probabilities, and said twelfth process determining similarity between the contents of the contents data and the contents of the other contents data on the basis of the difference.

**10.** The data classification method according to claim 1, further comprising

a thirteenth process which is performed prior to the first process, said the thirteenth process receiving a broadcasting wave to record the contents data included in the broadcasting wave on a recording medium,
wherein
in the first process,
the contents data is read from the recording medium to acquire the contents data.

**11.** A summary data generating method, **characterized in that** it comprises:

the first process which acquires contents data including an attribute corresponding to a character appearing in contents with plot, an attribute corresponding to a set location appearing as a stage in the contents, and additional information representing at least one of the attributes;
the second process which calculates the appearing probability of appearance of at least one of the character and the set location at an arbitrary point of time in a story line of the contents on the basis of the additional information;
the third process which determines at least one of the character serving as the main character in the contents and the set location serving as a main stage in the contents on the basis of the appearance probabilities; and
the fourth process which time-serially connects portions in which the character or the set location determined in the third process appears to generate summary data corresponding to a summary of the contents data.

**12.** A data classification apparatus, **characterized in that** it comprises:

a contents data acquiring device (11, 12, 16) which acquires contents data including an attribute corresponding to a character appearing in contents with plot, an attribute corresponding to a set location appearing as a stage in the contents, and additional information representing at least one of the attributes;
a calculation device (16) which calculates the appearing probability of appearance of at least one of the character and the set location at an arbitrary point of time in a story line of the contents on the basis of the additional information; and
a classification device (16) which classifies the contents data on the basis of the appearing probability.

**13.** A summary data generating apparatus, **characterized in that** it comprises:

a contents data acquiring device (11, 12, 16) which acquires contents data including an attribute corresponding to a character appearing in contents with plot, an attribute corresponding to a set location appearing as a stage in the contents, and additional information representing at least one of the attributes;

a calculation device (16) which calculates the appearing probability of appearance of at least one of the character and the set location at an arbitrary point of time in a story line of the contents on the basis of the additional information;

a determination device (16) which determines at least one of the character serving as the main character in the contents and the set location serving as a main stage in the contents on the basis of the appearance propabilities; and

a summary data generating device (16) which time-serially connects portions in which the character or the set location determined by the determination device appears to generate summary data corresponding to a summary of the contents data.

14. A computer readable information recording medium on which a data classification program to classify contents data with a computer is recorded, **characterized in that**

the data classification program makes the computer (16) function as

a contents data acquiring device (16) which acquires contents data including an attribute corresponding to a character appearing in contents with plot, an attribute corresponding to a set location appearing as a stage in the contents, and additional information representing at least one of the attributes;

a calculation device (16) which calculates the appearing probability of appearance of at least one of the character and the set location at an arbitrary point of time in a story line of the contents on the basis of the additional information; and

a classification device (16) which classifies the contents data on the basis of the appearing probability.

15. A computer readable information recording medium on which a summary data generating program to classify contents data with a computer is recorded, **characterized in that**

the summary data generating program makes the computer (16) function as

a contents data acquiring device (16) which acquires contents data including an attribute corresponding to a character appearing in contents with plot, an attribute corresponding to a set location appearing as a stage in the contents, and additional information representing at least one of the attributes;

a calculation device (16) which calculates the appearing probability of appearance of at least one of the character and the set location at an arbitrary point of time in a story line of the contents on the basis of the additional information;

a determination device (16) which determines at least one of the character serving as a main character in the contents and the set location serving as a main stage in the contents on the basis of the appearance probabilities; and

a summary data generating device (16) which time-serially connects portions in which the character or the set location determined by the determination device appears to generate summary data corresponding to a summary of the contents data.

# FIG. 1

2

TV RECEIVING UNIT
AT
11

HDD
HD
121
12

USER I/F UNIT
13

IMAGE DISPLAY UNIT
14

17

TABLE RECORDING UNIT
15

STORY ANALYZING UNIT
161

RECORDING/ REPRODUCING UNIT
162

SYSTEM CONTROL UNIT
16

1

# FIG. 2

| SCENE 1 | SCENE 2 | - - - - - - - - - - - - - - - - - - - - - - - - | SCENE n |
|---------|---------|---------------------------------------------|---------|

| SHOT 1 | SHOT 2 | - - - - - - - - - - - - - - - | SHOT n |
|--------|--------|------------------------------|--------|

1 FRAME

| FRAME 1 | FRAME 2 | - - - - - - - - - - - - - - - - - | FRAME n |
|---------|---------|------------------------------------|---------|

| VIDEO | AUDIO |
|-------|-------|

ADDITIONAL VALUE

1) NAME OF CHARACTER ┐
2) AGE OF CHARACTER   │ PERSON
3) SEX OF CHARACTER   │ INFORMATION
4) OCCUPATION OF CHARACTER ┘
5) LOCATION INFORMATION
6) SOUND TONE INFORMATION OF BGM
7) CATEGORY INFORMATION

EP 1 533 715 A2

# FIG. 3

|  | PERSON 1 | PERSON 2 | PERSON 3 | PERSON 4 | · · · | PERSON i | · · · | PERSON n |
|---|---|---|---|---|---|---|---|---|
| PERSON 1 | t (11) | t (21) | t (31) | t (41) | · · · | t (i 1) | · · · | t (n1) |
| PERSON 2 | t (12) | t (22) | t (32) | t (42) | · · · | t (i 2) | · · · | t (n2) |
| PERSON 3 | t (13) | t (23) | t (33) | t (43) | · · · | t (i 3) | · · · | t (n3) |
| PERSON 4 | t (14) | t (24) | t (34) | t (44) | · · · | t (i 4) | · · · | t (n4) |
| ⋮ | ⋮ | ⋮ | ⋮ | ⋮ | ⋮ | ⋮ | ⋮ | ⋮ |
| PERSON j | t (1 j) | t (2 j) | t (3 j) | t (4 j) | · · · | t (i j) | · · · | t (n j) |
| ⋮ | ⋮ | ⋮ | ⋮ | ⋮ | ⋮ | ⋮ | ⋮ | ⋮ |
| PERSON n | t (1n) | t (2n) | t (3n) | t (4n) | · · · | t (i n) | · · · | t (nn) |

TBL1

EP 1 533 715 A2

# FIG. 4

|  | LOCATION 1 | LOCATION 2 | LOCATION 3 | LOCATION 4 | · · · | LOCATION i | · · · | LOCATION m |
|---|---|---|---|---|---|---|---|---|
| LOCATION 1 | tp(11) | tp(21) | tp(31) | tp(41) | · · · | tp(i1) | · · · | tp(m1) |
| LOCATION 2 | tp(12) | tp(22) | tp(32) | tp(42) | · · · | tp(i2) | · · · | tp(m2) |
| LOCATION 3 | tp(13) | tp(23) | tp(33) | tp(43) | · · · | tp(i3) | · · · | tp(m3) |
| LOCATION 4 | tp(14) | tp(24) | tp(34) | tp(44) | · · · | tp(i4) | · · · | tp(m4) |
| ⋮ | ⋮ | ⋮ | ⋮ | ⋮ | ⋮ | ⋮ | ⋮ | ⋮ |
| LOCATION j | tp(1j) | tp(2j) | tp(3j) | tp(4j) | · · · | tp(ij) | · · · | tp(mj) |
| ⋮ | ⋮ | ⋮ | ⋮ | ⋮ | ⋮ | ⋮ | ⋮ | ⋮ |
| LOCATION m | tp(1m) | tp(2m) | tp(3m) | tp(4m) | · · · | tp(im) | · · · | tp(mm) |

TBL2

EP 1 533 715 A2

# FIG. 5

EP 1 533 715 A2

FIG. 6

# FIG. 7

| | LOCATION GROUP aa | LOCATION GROUP ab1 | LOCATION GROUP ab2 | LOCATION GROUP ab3 | ... | LOCATION GROUP ab6 |
|---|---|---|---|---|---|---|
| PERSON GROUP aa | CLASSIFI-CATION aaaa | CLASSIFI-CATION ab1aa | CLASSIFI-CATION ab2aa | CLASSIFI-CATION ab3aa | ... | CLASSIFI-CATION ab6aa |
| PERSON GROUP ab1 | CLASSIFI-CATION aaab1 | CLASSIFI-CATION ab1ab1 | CLASSIFI-CATION ab2ab1 | CLASSIFI-CATION ab3ab1 | ... | CLASSIFI-CATION ab6ab1 |
| PERSON GROUP ab2 | CLASSIFI-CATION aaab2 | CLASSIFI-CATION ab1ab2 | CLASSIFI-CATION ab2ab2 | CLASSIFI-CATION ab3ab2 | ... | CLASSIFI-CATION ab6ab2 |
| PERSON GROUP ab3 | CLASSIFI-CATION aaab3 | CLASSIFI-CATION ab1ab3 | CLASSIFI-CATION ab2ab3 | CLASSIFI-CATION ab3ab3 | ... | CLASSIFI-CATION ab6ab3 |
| ⋮ | ⋮ | ⋮ | ⋮ | ⋮ | ⋮ | ⋮ |
| PERSON GROUP ab6 | CLASSIFI-CATION aaab6 | CLASSIFI-CATION ab1ab6 | CLASSIFI-CATION ab2ab6 | CLASSIFI-CATION ab3ab6 | ... | CLASSIFI-CATION ab6ab6 |

TBL3−K

# FIG. 8

```
        ( START )
            │
            ▼
┌──────────────────────────┐
│   READ  CONTENTS  DATA   │ ─── S1
└──────────────────────────┘
            │
            ▼
┌──────────────────────────┐
│ PERFORM  STORY  MATRIX  DATA │ ─── S2
│     GENERATING  PROCESS      │
└──────────────────────────┘
            │
            ▼
┌──────────────────────────┐
│ PERFORM  STORY  MATRIX  DATA │ ─── S3
│     CONVERSION  PROCESS      │
└──────────────────────────┘
            │
            ▼
┌──────────────────────────┐
│      PERFORM  STORY       │ ─── S4
│ CLASSIFICATION  PROCESS   │
└──────────────────────────┘
            │
            ▼
┌──────────────────────────┐
│       WRITE  STORY        │ ─── S5
│ CLASSIFICATION  RESULT    │
└──────────────────────────┘
            │
            ▼
┌──────────────────────────┐
│ PERFORM  DISPLAY  PROCESS │ ─── S6
└──────────────────────────┘
            │
            ▼
         (  END  )
```

# FIG. 9

# FIG.10

```
         ┌─────────────────────────┐
         │      START  STORY        │
         │ CLASSIFICATION  PROCESS  │
         └────────────┬────────────┘
        ┌─────────────┴─────────────┐
        ▼                           ▼
┌──────────────────────┐   ┌──────────────────────┐
│ PERFORM PERSON GROUP │   │ PERFORM LOCATION GROUP│
│    CLASSIFICATION    │   │    CLASSIFICATION    │
│       PROCESS        │   │       PROCESS        │
└──────────┬───────────┘   └──────────┬───────────┘
          Sa1                        Sa2
           └───────────┬──────────────┘
                       ▼
         ┌──────────────────────────┐
         │ PERFORM CLASSIFICATION   │
         │ BY PERSON GROUP AND      │─Sa3
         │    LOCATION GROUP        │
         └────────────┬─────────────┘
                      ▼
              ┌──────────────┐
              │     END      │
              └──────────────┘
```

# FIG.11

```
START PERSON GROUP
CLASSIFICATION PROCESS
        │
        ▼
    Sb1
IS dA THRESHOLD ──── NO
VALUE RA OR
MORE?
    │
   YES
    ▼
SELECT LATENT MAIN CHARACTER ── Sb2
        │
        ▼
    Sb3
DOES α(i) CORRESPONDING TO ──── NO
LATENT MAIN CHARACTER INCLUDE
VALUE WHICH IS THRESHOLD
VALUE Hα OR MORE
?
    │
   YES
    ▼
    Sb4
THE NUMBER OF PERSONS
HAVING VALUES EXCEEDING
THRESHOLD VALUE Hα
?

a)=              b)=           c)=
ONE              TWO           THREE
PERSON           PERSONS       PERSONS

DETERMINE      DETERMINE      DETERMINE
PERSON         PERSON         PERSON
GROUP ab1      GROUP ab2      GROUP ab3
                Sb6
Sb5                           Sb7

    Sb8
DOES α(i) CORRESPONDING TO ──── NO
LATENT MAIN CHARACTER INCLUDE
VALUE WHICH IS THRESHOLD
VALUE Lα OR MORE
?
    │                         DETERMINE
   YES                        PERSON
    ▼                         GROUP aa
                              Sb13
    Sb9
THE NUMBER OF PERSONS
HAVING VALUES EXCEEDING
THRESHOLD VALUE Lα
?

a)=              b)=           c)=
ONE              TWO           THREE
PERSON           PERSONS       PERSONS

DETERMINE      DETERMINE      DETERMINE
PERSON         PERSON         PERSON
GROUP ab4      GROUP ab5      GROUP ab6
                Sb11
Sb10                          Sb12

            END
```

# FIG.12

```
       ┌─────────────────────────┐
       │ START LOCATION GROUP    │
       │ CLASSIFICATION PROCESS  │
       └─────────────────────────┘
                   │
                   ▼
              Sc1
        ╱ IS dB THRESHOLD ╲        NO
       ⟨  VALUE RB OR      ⟩ ────────────┐
        ╲    MORE?        ╱              │
                   │ YES                 │
                   ▼                     │
       ┌─────────────────────────┐       │
       │ SELECT LATENT CENTRAL   │─Sc2   │
       │ LOCATION                │       │
       └─────────────────────────┘       │
                   │                     │
                   ▼   Sc3               │
        ╱ DOES β(i) CORRESPONDING TO ╲  NO │
       ⟨ LATENT CENTRAL LOCATION INCLUDE⟩──┤
        ╲ VALUE WHICH IS THRESHOLD    ╱   │
        ╲   VALUE Hβ OR MORE ?       ╱    │
                   │ YES                  │
                   ▼                      │
              Sc4                         │
        ╱ THE NUMBER OF LOCATIONS ╲ Sc4  │
 a)=   ⟨  HAVING VALUES EXCEEDING  ⟩ c)= │
 ONE    ╲  THRESHOLD VALUE Hβ ?   ╱  THREE│
 LOCA-     │         │        │      LOCA-│
 TION    b)=TWO              TIONS        │
         LOCATIONS                        │
   ▼         ▼             ▼              │
┌────────┐┌────────┐   ┌────────┐         │
│DETERMINE││DETERMINE│  │DETERMINE│        │
│LOCATION ││LOCATION │  │LOCATION │        │
│GROUP ab1││GROUP ab2│  │GROUP ab3│        │
└────────┘└────────┘   └────────┘         │
 Sc5   Sc6               Sc7              │
   └──────┴───────┬──────────┘            │
                  │                       │
                  ▼                       │
        ╱ DOES β(i) CORRESPONDING TO ╲ Sc8│
       ⟨ LATENT CENTRAL LOCATION INCLUDE⟩─┤
        ╲ VALUE WHICH IS THRESHOLD    ╱ NO│
        ╲   VALUE Lβ OR MORE ?       ╱    │
                  │ YES                   ▼
                  ▼                 ┌──────────┐
             Sc9                    │DETERMINE │
        ╱ THE NUMBER OF LOCATIONS ╲ │LOCATION  │
 a)=   ⟨  HAVING VALUES EXCEEDING  ⟩│GROUP aa  │
 ONE    ╲  THRESHOLD VALUE Lβ ?   ╱ └──────────┘
 LOCA-     │        │        │       Sc13
 TION    b)=TWO          c)=THREE
         LOCATIONS        LOCATIONS
   ▼         ▼             ▼
┌────────┐┌────────┐   ┌────────┐
│DETERMINE││DETERMINE│  │DETERMINE│
│LOCATION ││LOCATION │  │LOCATION │
│GROUP ab4││GROUP ab5│  │GROUP ab6│
└────────┘└────────┘   └────────┘
 Sc10  Sc11              Sc12
   └──────┴──────┬──────────┘
                 ▼
             ┌───────┐
             │  END  │
             └───────┘
```

# FIG.13

CATEGORY SELECTION

DRAMA (TOTAL FIVE CONTENTS)

DOCUMENTARY (TOTAL TWO CONTENTS)

COMEDY!! (TOTAL THREE CONTENTS)

# FIG.14

| CONTENTS SELECTION | | | |
|---|---|---|---|
| CLASSIFI-CATION ab2 ab1 | LOVE STORY ⬇ ONE LOCATION IS A STAGE | CONTENTS 1 | MAIN CHARACTER ◯◯ |
| | | CONTENTS 2 | MAIN CHARACTER △△ |
| CLASSIFI-CATION ab3 ab3 | FIGHTERS FOR JUSTICE ⬇ THREE LOCATIONS ARE STAGES | CONTENTS 3 | MAIN CHARACTER ◯◯ |
| | | CONTENTS 4 | MAIN CHARACTER ✕✕ |

# FIG.15

| CATEGORY | STORY CLASSIFICATION | TOTAL NUMBER OF TIMES OF REPRODUCTION |
|---|---|---|
| DRAMA | CLASSIFICATION aaaa | 10 |
| | CLASSIFICATION aaab1 | 5 |
| | ⋮ | ⋮ |
| | TOTAL | 120 |
| DOCUMENTARY | CLASSIFICATION aaaa | 0 |
| | CLASSIFICATION aaab1 | 1 |
| | ⋮ | ⋮ |
| | TOTAL | 43 |
| | ⋮ | ⋮ |

TBL4

# FIG.16

START

IS FREE SPACE ON THE HARD DISC PREDETERMINED THRESHOLD VALUE OR LESS? — Sd1

NO

YES

SELECT CATEGORY — Sd2

SELECT OBJECT TO BE ERASED — Sd3

ERASE — Sd4

END

# FIG.17

| | | LOCATION | |
|---|---|---|---|
| | | SIMILAR | NOT SIMILAR |
| CHARACTER | SIMILAR | SIMILARITY A | SIMILARITY B |
| | NOT SIMILAR | SIMILARITY C | SIMILARITY D |

TBL5

# FIG.18

```
          ┌─────────────┐
          │    START    │
          └──────┬──────┘
                 │
                 ▼
     ┌──────────────────────────┐
     │   READ  CONTENTS  DATA   │──Se1
     └─────────────┬────────────┘
                   │
                   ▼
     ┌──────────────────────────┐
     │ PERFORM STORY MATRIX DATA│──Se2
     │    GENERATING  PROCESS   │
     └─────────────┬────────────┘
                   │
                   ▼
     ┌──────────────────────────┐
     │ PERFORM STORY MATRIX DATA│──Se3
     │    CONVERSION  PROCESS   │
     └─────────────┬────────────┘
                   │
                   ▼
     ┌──────────────────────────┐
     │      PERFORM  STORY      │──Se4
     │    COMPARISON  PROCESS   │
     └─────────────┬────────────┘
                   │
                   ▼
     ┌──────────────────────────┐
     │       WRITE  STORY       │──Se5
     │    COMPARISON  RESULT    │
     └─────────────┬────────────┘
                   │
                   ▼
     ┌──────────────────────────┐
     │  PERFORM DISPLAY PROCESS │──Se6
     └─────────────┬────────────┘
                   │
                   ▼
          ┌─────────────┐
          │     END     │
          └─────────────┘
```

# FIG.19

```
        ┌─────────────────────────┐
        │      START  STORY       │
        │   COMPARISON  PROCESS   │
        └─────────────────────────┘
                     │
      ┌──────────────┼──────────────┐
      ▼                             ▼
┌───┬─────────────────┬───┐   ┌───┬─────────────────┬───┐
│   │ PERFORM  STORY  │   │   │   │ PERFORM  STORY  │   │
│   │COMPARISON PROCESS│  │   │   │COMPARISON PROCESS│  │
│   │  BY MATRIX U    │   │   │   │  BY MATRIX V    │   │
└───┴─────────────────┴───┘   └───┴─────────────────┴───┘
 Sf1                              Sf2
      └──────────────┬──────────────┘
                     ▼
        ┌─────────────────────────┐
        │   PERFORM  COMPARISON   │─── Sf3
        │ BY PERSON AND LOCATION  │
        └─────────────────────────┘
                     │
                     ▼
              ┌─────────────┐
              │     END     │
              └─────────────┘
```

# FIG.20

```
        ┌──────────────────────┐
        │    START  STORY      │
        │ COMPARISON  PROCESS  │
        │    BY MATRIX U       │
        └──────────────────────┘
                   │
                   ▼
              Sg1
        ╱────────────────────╲
       ╱  ARE  THE  NUMBERS   ╲      NO
      ⟨ OF CHARACTERS  EQUAL   ⟩──────────────┐
       ╲   TO EACH OTHER?     ╱               │
        ╲────────────────────╱                │
             YES │  Sg2                        │
                 ▼                             │
        ┌──────────────────────┐              │
        │ CALCULATE VALUE cA FOR│             │
        │  ELEMENT OF LATENT    │             │
        │   MAIN CHARACTER      │             │
        └──────────────────────┘             │
                 │                            │
                 ▼     Sg3                    │   Sg5
        ╱────────────────────╲      NO    ┌──────────────────────┐
       ⟨ IS VALUE cA THRESHOLD ⟩─────────▶│ DETERMINE THAT STORIES│
        ╲  VALUE OR LESS?     ╱           │  ARE NOT SIMILAR?     │
         ╲──────────────────╱            └──────────────────────┘
             YES │                             │
                 ▼                             │
        ┌──────────────────────┐─Sg4          │
        │ DETERMINE THAT STORIES│             │
        │    ARE  SIMILAR       │             │
        └──────────────────────┘             │
                 │◀───────────────────────────┘
                 ▼
             ┌────────┐
             │  END   │
             └────────┘
```

EP 1 533 715 A2

# FIG.21

```
        ( START STORY
          COMPARISON PROCESS
             BY MATRIX V )
                  |
                  v
              /ARE THE NUMBERS\    Sh1
             / OF LOCATIONS EQUAL \----NO----+
              \ TO EACH OTHER? /              |
                  |                           |
                 YES         Sh2              |
                  v                           |
          +-------------------+               |
          | CALCULATE VALUE cB FOR |          |
          | ELEMENT OF LATENT      |          |
          | CENTRAL LOCATION       |          |
          +-------------------+               |
                  |                           |
                  v          Sh3              v              Sh5
              /             \              +-------------------+
             / IS VALUE cB THRESHOLD \--NO-->| DETERMINE THAT STORIES |
              \ VALUE OR LESS? /             | ARE NOT SIMILAR?       |
                  |                          +-------------------+
                 YES                              |
                  v                               |
          +-------------------+  Sh4               |
          | DETERMINE THAT STORIES |               |
          | ARE SIMILAR           |                |
          +-------------------+                    |
                  |<----------------------------+
                  v
               ( END )
```

47

# FIG.22

START

↓

READ CONTENTS DATA ──Sj1

↓

PERFORM STORY MATRIX DATA
GENERATING PROCESS ──Sj2

↓

PERFORM STORY MATRIX DATA
CONVERSION PROCESS ──Sj3

↓

PERFORM STORY
SUMMING PROCESS ──Sj4

↓

WRITE STORY
SUMMING RESULT ──Sj5

↓

PERFORM DISPLAY PROCESS ──Sj6

↓

END